# EUROPEAN PATENT APPLICATION

(11) **EP 0 613 095 A2**
(43) Date of publication of application: **31.08.1994**
(21) Application number: 94300002.6
(22) Date of filing: 04.01.1994
(51) Int. Cl.: G06F 15/401, G06F 15/62

(54) **Method and apparatus for generating operation and operand databases and for employing them in color image processing**

(30) Priority: 28.01.1993 IL 10455393
(71) Applicant: SCITEX CORPORATION LTD., Herzliya 46103 (IL)
(72) Inventor: Ber, Ofer, Herzliya 46407 (IL); Maayan, Lior, Tel Aviv 69865 (IL); Kreitman, Haim, Kfar Saba 44454 (IL)
(74) Representative: Hillier, Peter

(57) **Abstract**

A method for storing an image in an image processing database format including the steps of automatically defining a multiplicity of regions in the image, uniting individual ones of the regions in accordance with user input, thereby to define a plurality of image processing operands, and generating an image processing operand database by storing the locations of the image processing operands.

## Description

### FIELD OF THE INVENTION

The present invention relates to image processing generally and more particularly to pre-press processing of color images.

### BACKGROUND OF THE INVENTION

Image processing techniques are described in Rosenfeld, A. and Kak, A., Digital picture processing, 2nd Ed., Vol. 1, Computer science and applied mathemetics series, W. Rheinboldt (Ed.), Academic Press, 1982, New York.

Computerized graphic techniques are described in Folley, J.D. and Van-Dam, A. Fundamentals of interactive computer graphics, Systems Program Series, Addison-Wesley.

Database systems are described in Date, C. J., An Introduction to Database Systems, Addison-Wesley, 1983, USA.

The disclosures of all the above documents are incorporated herein by reference.

### SUMMARY OF THE INVENTION

The present invention seeks to provide a method and system for color image processing in which the unit which is processed is not a raster unit such as a pixel but rather is an operand.

Preferably, each operand is a meaningful entity with useful characteristics. Operands are typically not defined on a grid, unlike raster units. Instead, their locations and borders are preferably determined by the type of color processing operation which it is desired to perform or the type of color processing operation which it is believed might be performed in future.

There is thus provided in accordance with a preferred embodiment of the present invention a method for storing an image in an image processing database format including the steps of automatically defining a multiplicity of regions in the image, uniting individual ones of the regions in accordance with user input, thereby to define a plurality of image processing operands, and generating an image processing operand database by storing the locations of the image processing operands.

Further in accordance with a preferred embodiment of the present invention, at least one of the following features is generally uniform within each of the multiplicity of regions: color, gray level, and texture.

There is also provided, in accordance with a preferred embodiment of the present invention, a method for storing an image in an image processing database format including the steps of defining a plurality of image processing operands in the image, determining at least one image processing feature of at least one of the image processing operands, and generating an image processing operand database including the locations and features of the image processing operands.

Further in accordance with a preferred embodiment of the present invention, the step of defining operands includes the steps of automatically defining a multiplicity of regions in the color image, and uniting individual ones of the regions in accordance with user input, thereby to define the plurality of image processing operands.

Still further in accordance with a preferred embodiment of the present invention, the step of defining operands includes the steps of receiving at least a portion of a preliminary operand contour from a user, and analyzing the vicinity of the preliminary operand contour in order to automatically generate an improved operand contour.

Additionally in accordance with a preferred embodiment of the present invention, each image processing feature includes one of the following features: a semantic feature, resolution, spatial fequency, contrast, noise level, lighting, alpha masking, brightness, color, dynamic color range, pattern, position in space, 3D configuration, and a characterization of a spatial relationships with another operand.

Still further in accordance with a preferred embodiment of the present invention, the characterization of a spatial relationship includes one of the following characterizations: one operand is on top of the other, one operand is under the other, one operand is next to the other, one operand is inside the other, and one operand contains the other.

Further in accordance with a preferred embodiment of the present invention, the method includes the step of performing an image processing operation at least twice on at least two respective operand sets, each of the operand sets including at least one of the operands in the operand database.

Still further in accordance with a preferred embodiment of the present invention, the method also includes the step of generating a database of image processing operations by storing, for at least one operand of an operand set of at least one image processing operation, an indication of operand features pertinent to the image processing operation.

Further in accordance with a preferred embodiment of the present invention, the method also includes the step of performing an image processing operation from the image processing operations database on at least one image processing operand in the operand database by automatically modifying, within the operand, at least one image processing feature which is pertinent to the image processing operation according to the operation database.

There is also provided, in accordance with another preferred embodiment of the present invention, a method for employing an image processing database format to process an image, the method including the steps of generating an image processing operand database by defining a plurality of image processing operands in the image and storing the locations of the image processing operands, performing an image processing operation at least twice on an at least two respective operand sets, each of the operand sets including at least one of the operands in the operand database.

There is also provided, in accordance with another preferred embodiment of the present invention, a method for processing an image by employing an image processing operation in which a modified feature value is assigned to all image locations whose original feature value falls within a range of the image processing operation, the method including the steps of defining the location of an image processing operand including a multiplicity of image locations, for at least one feature characterizing individual image locations, determining the range of the feature within the operand, and performing the image processing operation on the image processing operand by defining the range of the operation as the range of the feature within the operand.

Further in accordance with a preferred embodiment of the present invention, each image location includes a pixel.

Still further in accordance with a preferred embodiment of the present invention, the image processing operation includes the operation of assigning a new color value.

Additionally in accordance with a preferred embodiment of the present invention, there is provided a method for representing image processing operations in memory including the step of storing, for at least one operand in an operand set of at least one image processing operation, an indication of operand features pertinent to the image processing operation.

Further in accordance with a preferred embodiment of the present invention, each of the image processing operations includes an individual one of the following operations: color correction, shape distortion, tint, copy, filters, delete object, simple merge, complex merge, cut-and-paste, and shadow.

Still further in accordance with a preferred embodiment of the present invention, the image is a raster image.

Still further in accordance with a preferred embodiment of the present invention, the step of performing includes the step of storing the image processing operation to be performed.

There is also provided, in accordance with another preferred embodiment of the present invention, color image processing apparatus including color image memory in which a representation of a color image is stored, an operations database memory in which a plurality of characteristics of at least one color image processing operation is stored, an operand database memory in which a plurality of features of at least one color image operand is stored, and a control unit which is operative to retrieve at least one operation from the operations database and at least one operand from the operand database memory and to perform the operation on the operand by modifying the representation of the color image.

There is further provided, in accordance with another preferred embodiment of the present invention, apparatus for storing an image in an image processing database format, the apparatus including an automatic image region defining unit operative to automatically define a multiplicity of regions in the image, a user-interfacing operand generator operative to unite individual ones of the regions in accordance with user input, thereby to define a plurality of image processing operands, and an image processing operand database generator operative to store locations of the image processing operands within the image.

There is further provided, in accordance with another preferred embodiment of the present invention, apparatus for storing an image in an image processing database format, the apparatus including an operand defining user interface allowing a user to define a plurality of image processing operands in the image, an operand analyzer operative to determine at least one image processing feature of at least one of the image processing operands, and a operand database generator operative to generate an image processing operand database including the locations and features of the image processing operands.

There is further provided, in accordance with another preferred embodiment of the present invention, apparatus for employing an image processing database format to process an image, the apparatus including an operand database generator operative to generate an image processing operand database by defining a plurality of image processing operands in the image and storing the locations of the image processing operands, and an operand-based image processor in communication with the operand database and operative to perform an image processing operation at least twice on an at least two respective operand sets, each of the operand sets including at least one of the operands in the operand database.

There is further provided, in accordance with another preferred embodiment of the present invention, apparatus for processing an image by employing an image processing operation in which a modified feature value is assigned to all image locations whose original feature value falls within a range of the image processing operation, the apparatus including an operation location designator operative to define the location of an image processing operand including a multiplicity of image locations, a feature range identifier, operative, for at least one feature characterizing individual image locations, to determine the range of the feature within the operand, and an image processor communicating with the feature range identifier for performing the image processing operation on the image processing operand by defining the range of the operation as the range of the feature within the operand.

There is further provided, in accordance with another preferred embodiment of the present invention, apparatus for representing image processing operations in memory, the apparatus including an operand feature memory in which is stored, for at least one operand in an operand set of at least one image processing operation, an indication of operand features pertinent to the image processing operation.

### BRIEF DESCRIPTION OF THE DRAWINGS

The present invention will be understood and appreciated from the following detailed description, taken in conjunction with the drawings in which:
Fig. 1 is a simplified flowchart of an image processing method operative in accordance with a preferred embodiment of the present invention;
Fig. 2 is a simplified flowchart of a method for implementing operand definition step 102 of Fig. 1; and
Fig. 3 is a simplified block diagram of color processing apparatus suitable for implementing the method of Fig. 1.

### DETAILED DESCRIPTION OF PREFERRED EMBODIMENTS

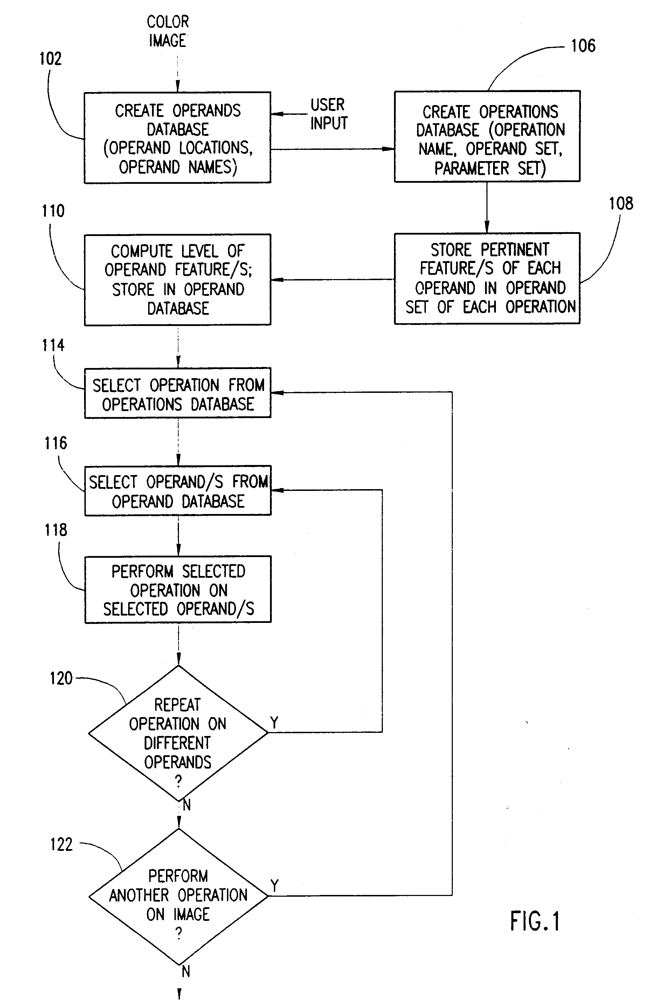

Reference is now made to Fig. 1 which is a simplified flowchart of an image processing method operative in accordance with a preferred embodiment of the present invention.

A particular feature of the method of Fig. 1 is that at least one operands are defined in a color image to be processed. Operands are portions of the colored image which are suitable units for a user-selected operation. For example, given a picture of a fruit bowl, a user may wish to perform an operation such as a change in the lighting model on each of a plurality of grapes in the fruit bowl. In this case, each grape is defined as an operand.

The method of Fig. 1 preferably includes the following steps:
Step 102: At least one operand is defined in the image and at least the location thereof, and preferably other characteristics or features thereof, is stored in an operands database. Preferably, the operand is assigned a name or title and the name or title is also stored in the operand database.

One method of identifying operands for database storage is as follows: The color image of interest is displayed to the user on a suitable device such as a CRT. The user traces the contour of each operand. This option is suitable for defining operands with a relatively simple contour which may include a large number of regions.

According to a preferred embodiment of the present invention, the user provides a rough trace of the contour which serves as a preliminary indication of the contour and the system is operative to automatically analyze the vicinity of the contour as preliminarily indicated in order to automatically generate an improved operand contour. A method for implementing this embodiment is described in copending coassigned Israel Patent Application 100256, a copy of which is appended hereto and is referenced Appendix A.

Preferably, the above operand contour delineation method also allows a user to delineate the contour of a portion of an operand to be included in or added to an existing operand and also to delineate the contour of a portion of an operand to be excluded or deleted from an existing operand.

A commercially available tool for creating, maintaining and accessing a database is DBASE.

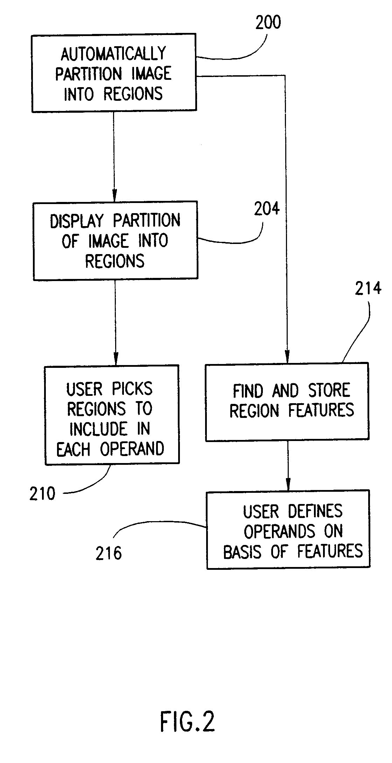

Other methods for implementing step 102 are described below with reference to Fig. 2. Preferably, the unit 102 is interactive, as explained in more detail below with reference to Fig. 2.

Step 106: At least one operation is defined which is to be performed on one or more operands in the image. For each operation, an operand set and/or a parameter set are defined and stored, thereby to provide an operations database.

An operand set is a set of one or more operands on which the operation is performed. For example, a color correction operation in which the color of a selected operand is modified may have a single-member operand set. However, if the color modification is defined by indicating that the color of the selected operand is to correspond to the color of a "target" operand, the color correction operation has a two-member operand set comprising the selected operand and the "target" operand. A merge operation also typically has at least two members in its operand set including a first member and a second member which is transported into adjacency with the first member.

A parameter set is a set of one or more parameters which characterize the operation. For example, if the operation is color correction, the parameter set may include a target color range and a transformation or correspondence defined between a source color range and the target color range.

Sample operations which may be stored in an operations database include the following types of operations: color correction; shape distortion; tint; copy; filters; delete object; simple merge; complex merge; cut-and-paste and shadow.

"Shape distortion" refers to distortion of the configuration or shape of a particular operand. For example, unsmiling lips may be distorted into smiling lips. Increasing or descreasing the size of an image are also examples of distortion.

"Tint" refers to coloring a particular operand a particular color using a particular color distribution defined over the area of the operand and, preferably, a particular noise model. The color, distribution and noise may each be determined directly by the user or may be defined by the user's indicating that the color, distribution and/or noise characterizing another, colored operand, are to be employed.

"Copy" refers to copying a particular operand onto another location of the color image, and either deleting the former contents of that location of the color image, or creating a transparency effect in which both the copied operand and the former contents of the location, are visible.

"Delete object" refers to deleting a particular operand from a color image. The "hole" in the image where the object or operand used to be may be covered by replacing the deleted operand with another operand, or alternatively by generating color content which brings the "hole" into accordance with its surroundings. For example, if a scar is deleted from the face of a model, skin colors may be assigned at the "hole" location which match the color of the skin surrounding the "hole".

"Simple merge" refers to copying an operand into a particular location of a color image and uniformizing one or more of the operand's characteristics, such as resolution and/or noise, with the corresponding characteristic/s of its vicinity in the color image. The operand may be rotated, scaled or distorted in the course of merging.

"Complex merge" refers to a merge operation which is similar to the "simple merge" operation described above except that, additionally, the borders of the merged operand are smoothed such that there is a smoother transition between the operand and its vicinity.

"Cut-and-paste" refers to a procedure in which a portion of a color image is deleted, which portion may be defined as a first operand, and is replaced by copying in a second operand and merging the second operand with the remainder of the color image.

It is appreciated that the above list of color image processing operations is not intended to be limiting and that substantially any color image processing operation may be stored as described herein.

Step 108: Pertinent features for each operand in the operand set of each operation are defined and stored in the operations database.

For example, in a color lighting operation, in which the color of a selected operand is lightened, the pertinent features for the selected operand may include one or more color categories to be found in the operand. For example, a user may wish to lighten all green areas in a green and red apple. A pertinent feature of the apple operand, which is included in the operand set of the "lighten" operation, is the range of colors which are to be categorized as green.

It is appreciated that substantially any feature may be stored. Sample features which are useful for performing a variety of color processing operations include the following:
1. Semantic features: Classification of an operand as belonging to a particular category. Each semantic category may itself be defined by a plurality of semantic features possessed by each member of the semantic category. A sample semantic category is "cars". Sample features of a car include: having four wheels, having windows, having steering wheel.
   A sample color processing operation in which semantic features are useful is:
   DO ALIKE: Repetition of a selected operation for each of a plurality of operands. For example, the user may wish to perform a selected operation on all cars included in a particular color image.
2. Resolution: Number of sampling points per unit length, such as number of pixels per inch.
   Sample color processing operations in which resolution are useful are:
   SHADOW: Generating a shadow for an operand in a color image, according to a particular lighting model. For example, it may be desired to modify the appearance of an operand lighted from above so that the operand will appear to be lighted from the side. The resolution of the artificially generated shadow area which is typically superimposed on the existing color image is preferably as similar as possible to the resolution of surrounding and underlying areas of the color image.
   MERGE: As explained above, a merge operation includes modifying a first color image by replacing a first operand therein with a second operand in a second color image and modifying the second operand and/or the surrounding areas in the first color image so as to uniformize the appearance of the modified first color image. In particular, the resolution in all portions of the modified first color image must be substantially uniform.
3. Contrast: A mathematical definition of contrast is provided on pages 53 - 55 in the above-referenced publication by Rosenfeld and Kak. Generally, contrast refers to differences in brightness within a color image.
   Sample color processing operations in which contrast is useful are filter operations. For example, a filter operation may be employed to achieve enhancement of edges in a color image. It may be desired to filter only those edges whose level of contrast exceeds a particular threshold value.
   Types of filtering include high emphasis filtering, homomorphic filtering, inverse filtering, least squares or Weiner filtering, median filtering and recursive filtering. It is appreciated that filtering operations may be useful in achieving a variety of effects. For example, high emphasis filtering is used for sharpening. Inverse, recursive and Wiener filtering are each used for restoration. Median filtering is used for smoothing.
   Filtering techniques are discussed in Rosenfeld and Kak, pp. 245 - 250, 261 - 264, 276 - 293, 311 - 331.
4. Local Noise level: Noise level is defined in the above-referenced publication by Rosenfeld and Kak, pp. 250 - 264. Generally, noise level refers to local random discrepancies in gray level within a generally uniform area of a color image.
   Sample color processing operations in which noise level is useful are MERGE, filter and SHADOW operations.
5. Lighting: The location, intensity, color and type of light source illuminating the operand.
   Sample color processing operations in which noise level is useful are merge and SHADOW operations. In merge operations, if lighting of different operands are incompatible or incongruent, the merged image appears artificial. Therefore, the lighting of all portions of a merged image are preferably brought into accordance as part of the merge operation.
6. Alpha masking: A feature characterizing each portion of an operand defining the extent to which a particular operation is to be activated on that portion of the operand.
   Alpha masking is useful in a wide variety of operations. For example, it may be desired to lighten the color of a particular operand such that the periphery of the operand is considerably lightened whereas the center of the operand is only slightly lightened. The same alpha masking may be employed to darken the color of the same operand such that the periphery of the operand is considerably darkened whereas the center of the operand is only slightly darkened.
7. Brightness: A mathematical definition of brightness is provided on pp. 53 - 55 of Rosenfeld and Kak. Sample color processing operations in which brightness is useful are "filter" operations. For example, a filter operation may be employed to achieve noise reduction in a color image. It may be desired to filter only those portions of the color image whose level of brightness exceeds a particular threshold value.
8. Color: Central tendency of the color of an operand or of each of a plurality of regions defined therewithin. Mathematical representations of color are discussed in Rosenfeld and Kak, Chapter 3, p. 62.
   Color is important, for instance, in color correction and merge operations. For example, a color correction operation may be defined by indicating a first operand whose color has been stored and requesting that the color of a second operand be changed to correspond to the color of the first operand.
9. Dynamic color range: The extreme values of each color component within the operand. For example, if a color image is represented in RGB, the dynamic color range of an operand comprises an indication of the maximum R, G, and B values within the operand and of the minimum R, G, and B values within the operand.
   Dynamic color range is pertinent to merge operations because if one operand with a particular dynamic color range is merged with another operand with a very different dynamic color range, the merged image will appear artificial.
   Dynamic color range is pertinent to color correction operations. A color correction operation may be defined by indicating a first operand and requesting that the color of a second operand, whose dynamic color range has been stored, be changed to correspond to the color of the first operand. The color correction operation comprises the operation of modifying each pixel within the color image whose color value falls within the stored color range, to the color of the first operand.
10. Pattern: Repeated, predictable or nonrandom variation in the appearance of an operand, such as a relationship between portions of the operand. For example, the pattern of a chessboard or a vignette or "degrade" pattern.
   The pattern of an operand is pertinent to operations such as tinting, for example, in artificial image creation.
11. Position in space: For each operand, one or more point locations therein may be defined, and the position of each such point location, relative to other operands in the color image, may be specified, such as in terms of a Cartesian or polar coordinate system. For example, for a color image including a plurality of children's cube-shaped building blocks, each building block may be defined as an operand, two point locations may be defined for each building block, such as two of the 8 vertices of each building block, and an (x,y,z) vector may be stored for each of the two vertices of each of the building blocks, indicating the position of each vertex along the x, y and z axes of a space in which the building blocks are located.
12. 3D configuration: For each operand, one or more locations therein may be defined, and the position of each such point location, relative to the other point locations in the same operand, may be specified, such as in terms of a Cartesian or polar coordinate system. For example, for a color image including a plurality of children's cube-shaped building blocks, each building block may be defined as an operand and a plurality of point locations may be defined for each building block, such as the 8 vertices of each building block. An (x,y,z) vector may be stored for each of the 8 vertices of each of the building blocks, indicating the 3D configuration of each building block in terms of the relative position in space of each vertex along the x, y and z axes.
13. A characterization of a spatial relationship with another operand: For example, an operand may be characterized as being on top of, under, next to or inside another operand, or as containing the other operand.

Referring back to Fig. 1, steps 110 to 122 are now described.

Step 110: The levels of at least one operand feature is measured, quantified or determined and is stored for at least one of the operands in the operands database. For example, the dynamic color range may be determined and stored for each of a plurality of operands in an operand database by identifying, for each operand, the maximum and minimum values for each color component. Preferably, the operand features to be stored for a particular operand are determined by determining which operations it may be desired to perform on the operand, and by accessing the list of pertinent features for each such operation, provided in step 108.

Step 114: An operation is selected by the user.

Step 116: The user is prompted to select operands which will constitute the operand set for the selected operation. Methods for enabling a user to select an operand include, but are not limited to, the following:
a. If the operand database includes a name or title for some or all operands included therewithin, operands may be selected by displaying a menu including the names or titles of all named operands and receiving user input indicating the name or title of the user-selected operand.
b. The location of the operand may be identified by the user. For example, the user may select a point location on a display of a color image, using any suitable device such as a mouse, and the system then identifies the operand in which the point location is included.

In step 118 the selected operation is performed on the selected operands. For example: color correction. The operand set of color correction may include a single operand whose color is to be corrected. The pertinent feature of the operand is the source range of colors in the operand which are to be modified. The parameters of the operation include a color transformation from the source color range to a target color range including one or more colors.

According to a preferred embodiment of the present invention, at least one pertinent feature of at least one operand in the user-selected operand set of the user-selected operation is automatically modified. For example, a merge operation may be performed and the light models of the two operands being merged may be automatically brought into accordance.

Step 120: An individual operation may be performed more than once, wherein, each time, the operand set includes different operands from the operand database.

Step 122: The user may perform additional operations on the color image, until he is satisfied with the color image.

Reference is now made to Fig. 2 which is a simplified flowchart of a method for implementing operand definition step 102.

The method preferably comprises the following steps:
Step 200: The image is automatically partitioned into regions, on the basis of any suitable criterion. For example, the Knife is a system, developed at Stanford University, CA, USA, which partitions a colored image into regions on the basis of color density.

Alternatively, an image may be automatically partitioned into regions on the basis of color density by using a color density edge detection method such as the method described in copending coassigned Israel Patent Application 100256, a copy of which is appended hereto and is referenced Appendix A.

Still another alternative method for semi-automatic partitioning into regions on the basis of color density employs the Density Mask, which is a function provided on the Prisma workstation, commercially available from Scitex Corporation, Herzlia, Israel. The Density Mask is particularly advantageous in partitioning an image which includes an extremely fragmented or jagged body of a particular color, such as a person's hair, portions of sky behind a complicated structure such as a tree or the Eiffel tower. The Density Mask is described in User Guide 1 which is marketed with the Prisma workstation.

Alternatively, the image may be partitioned on the basis of gray level or texture. Alternatively, an existing partition of the image into regions may be employed.

Once a partition of the image into regions has been obtained, the regions are united into operands. Uniting the regions into an operand typically is carried out interactively and may be implemented using any suitable method such as any of the following alternatives:
Step 204: The image is displayed to the user such that the partition into regions is visible. Any suitable display format may be employed. For example, an identifying character such as a number may be superimposed upon each region. To view the contour of an individual region, the user inputs the identifying character and the contour of the individual region is highlighted or otherwise brought into view.

Alternatively or in addition, a network of lines representing region borders may be superimposed upon the displayed color image.

Step 210: The user indicates, for each operand to be defined, at least one region to be included in the operand. Typically, a plurality of regions are included in each operand. Included regions are identified by indicating a single point therewithin, using any suitable device such as a mouse. This option is particularly suitable for defining operands which include a relatively small number of regions but which may have a complex contour.

Preferably, step 210 enables a user to define regions to be included in or added to an operand and also to define regions to be excluded or deleted from an existing operand.

Alternatively or in addition, operands may be defined by performing steps 214 and 216. In step 214, which may be performed together with step 200, the level of at least one feature is determined and stored for each of the regions in the partition defined in step 200. Step 214 is similar to step 108 of Fig. 1 except that the unit of interest is a region rather than an operand.

In step 216, operands are defined by indicating a range of levels of one or more features. For example, in an image which depicts a scene including a tree, the color density of each region may be determined and stored in step 214. In step 216, a "tree" operand may be defined by indicating a range of color densities which include the greens and browns characteristic of a tree.

If the option of steps 214 and 216 is employed, then step 108 may be implemented as follows: to determine the level of a particular feature for a particular operand, the levels of that feature in each of the regions within the operand are suitable combined. For example, noise levels of a plurality of regions within an individual operand may be combined into an operand level noise vector, comprising a mean noise level and a standard deviation of noise value.

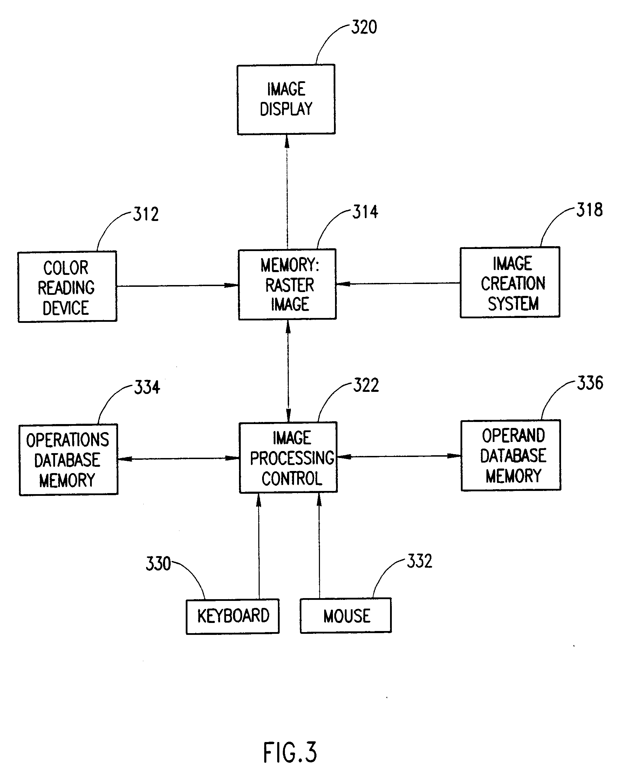

Reference is now made to Fig. 3 which is a simplified block diagram of color processing apparatus suitable for implementing the method of Fig. 1. The apparatus of Fig. 3 comprises a color reading device 312 such as a Smart Scanner, commercially available from Scitex Corporation, Herzlia, Israel, which is operative to provide a digital or electronic representation of a color image, such as a raster, continuous tone representation of a color image. The term "color image", as employed herein, is not intended to exclude single tone images such as a black and white image. The digital or electronic representation of the color image is stored in a suitable digital or electronic storage device 314 such as a frame buffer.

Scanner 312 may be replaced or supplemented with an image creation system 318 such as a Blaze workstation, commercially available from Scitex, which is operative to directly generate, by computerized techniques, a digital or electronic representation of a color image for storage in memory 314.

An analog representation of the image is provided to the user on an image display device 320 such as a CRT.

An image processing control unit 322 communicates with a user in accordance with the method shown and described above with reference to Fig. 1, via one or more suitable user input devices such as a keyboard 330 and/or a mouse 332. As explained in detail above, the image processing control unit 322 is operative to create and store an operations database 334, to create and store an operands database 336, and to employ the databases 334 and 336 to modify the raster image 314.

Databases 334 and 336 may be stored on any suitable form of electronic or digital memory, such as a hard disk or such as the main memory of a computer.

An example of a procedure suitable for defining operands as in step 102 is the XtAddEventHandler subroutine of the Enhanced X-windows toolkit, described in the User Interface, Vol. 8, AIX Version 3.2 for RISC System/6000, commercially available from IBM.

It will be appreciated by persons skilled in the art that the present invention is not limited to what has been particularly shown and described hereinabove. Rather, the scope of the present invention is defined only by the claims that follow:

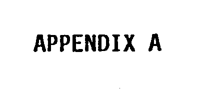

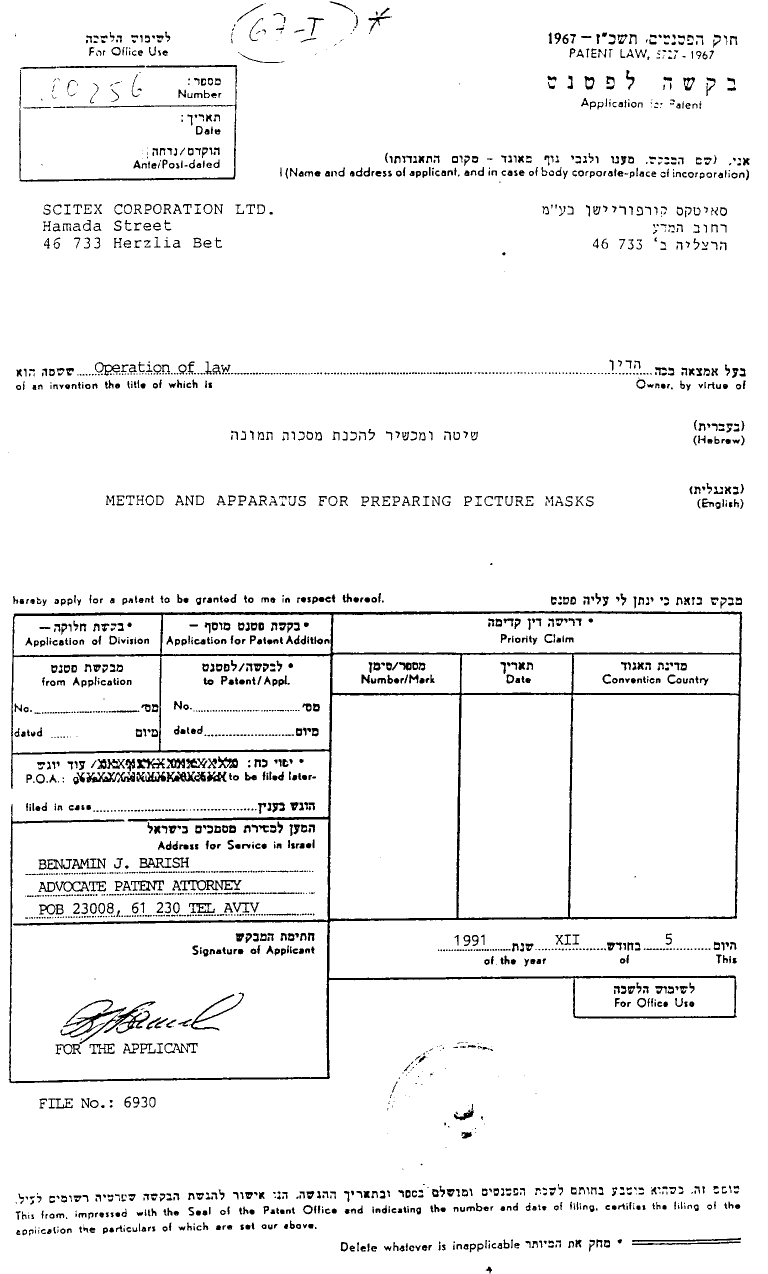

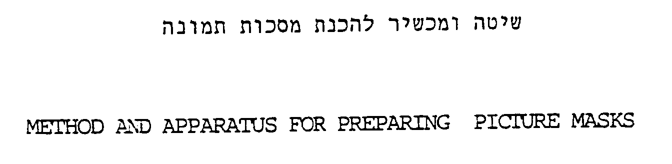

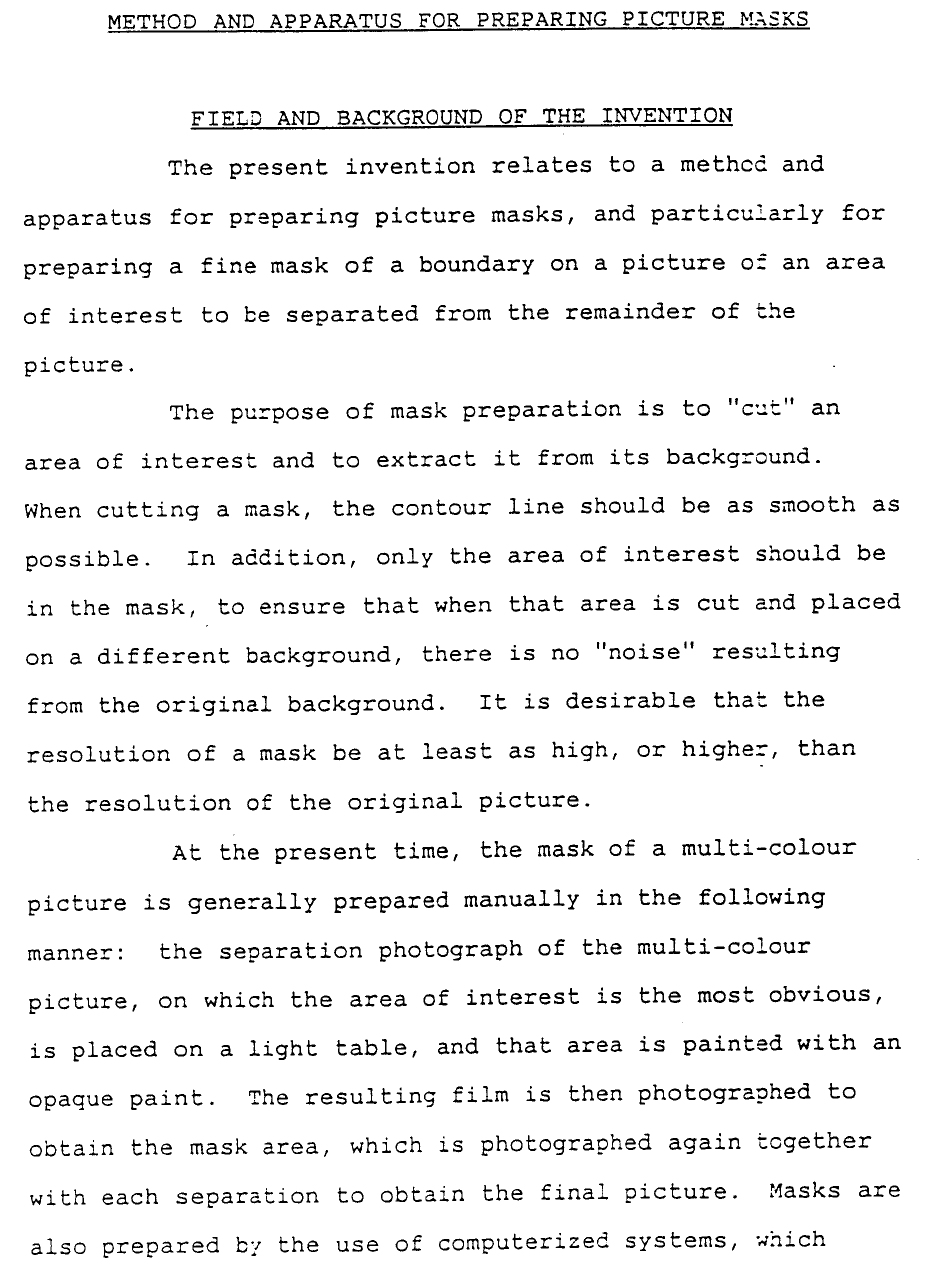

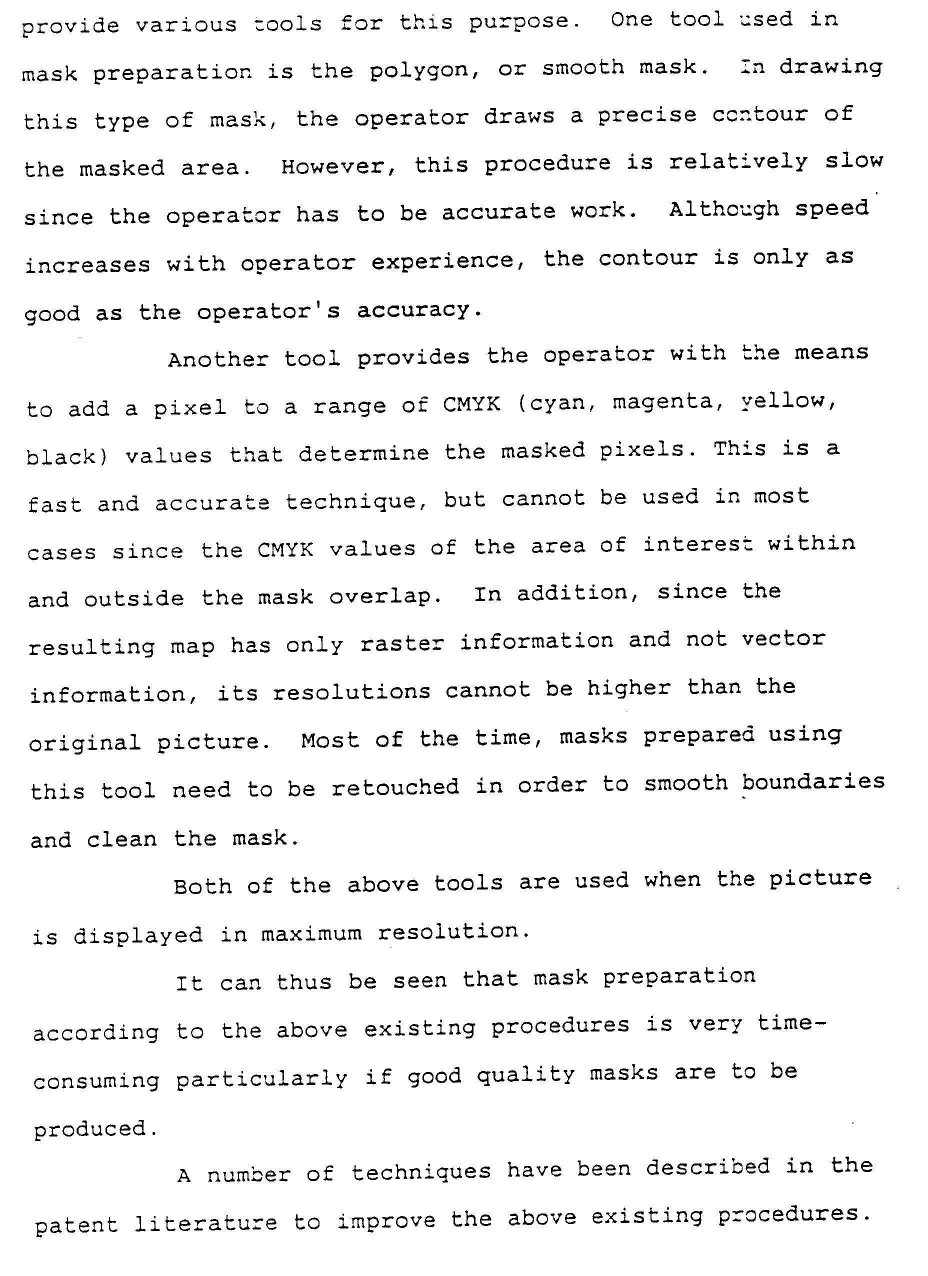

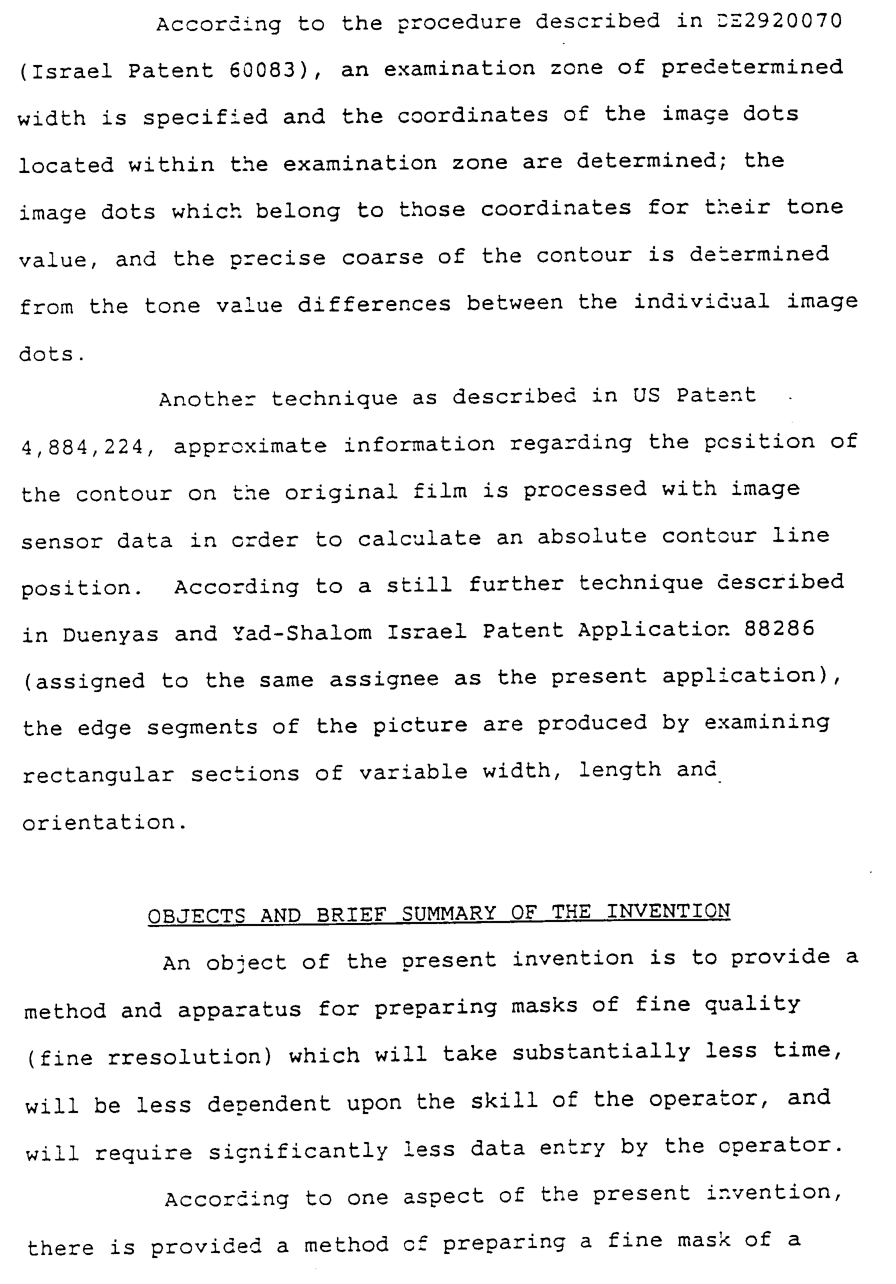

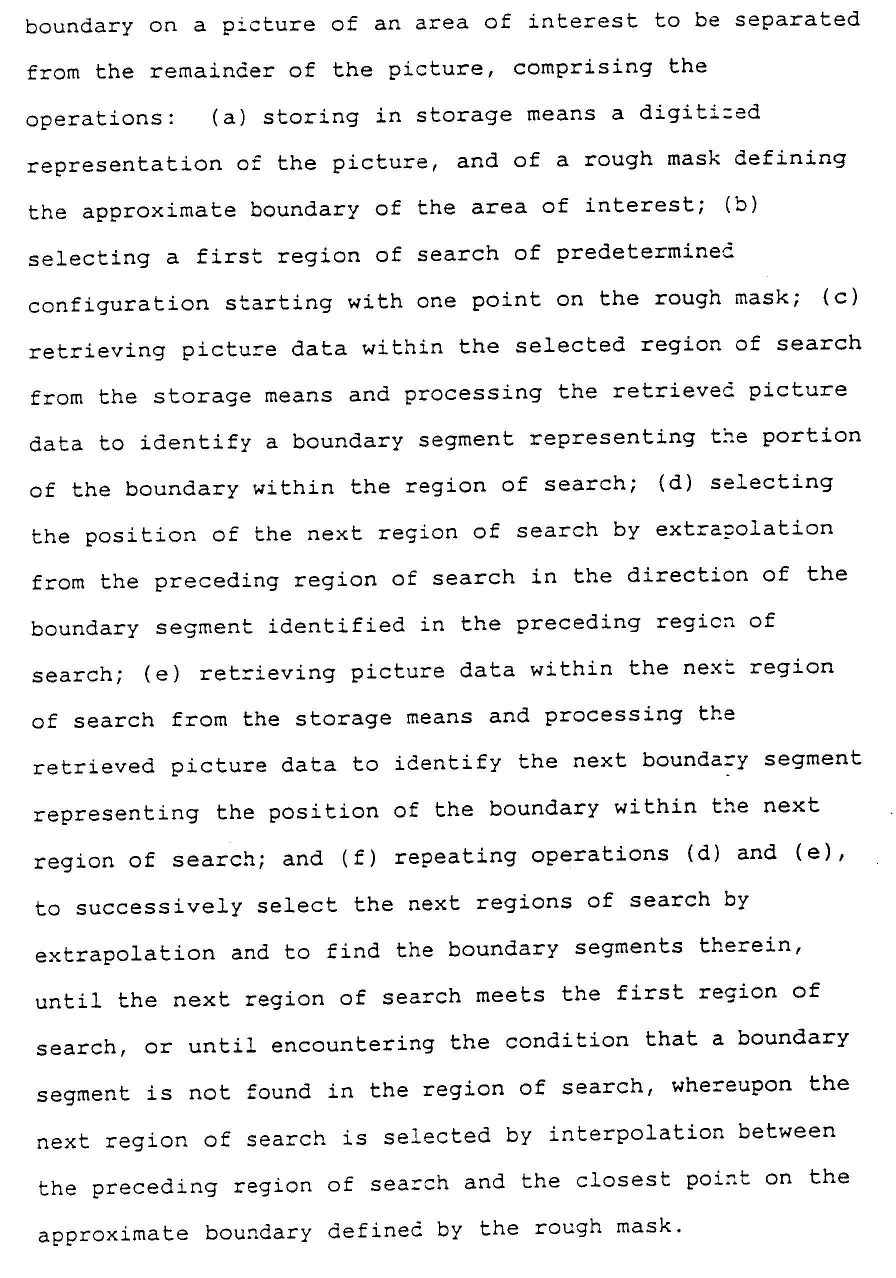

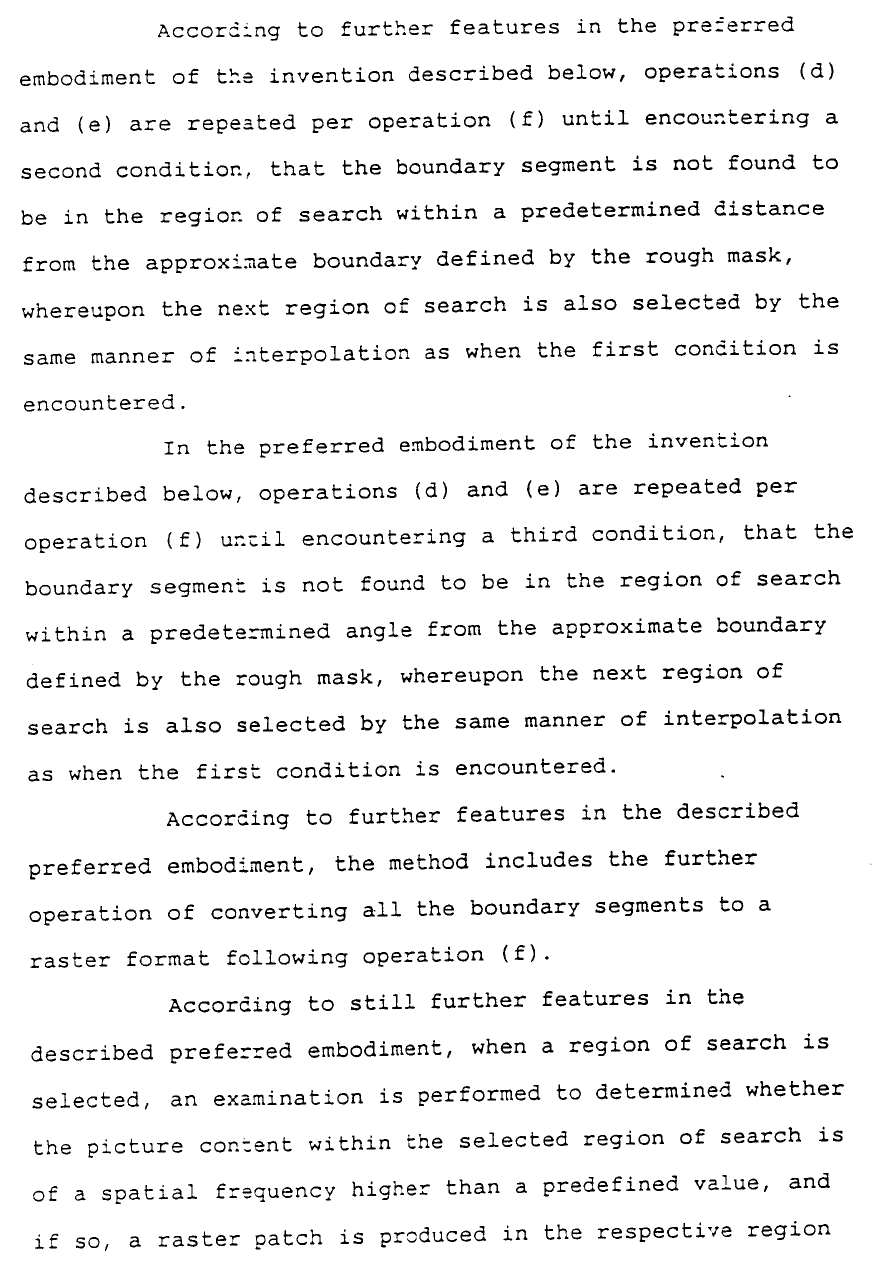

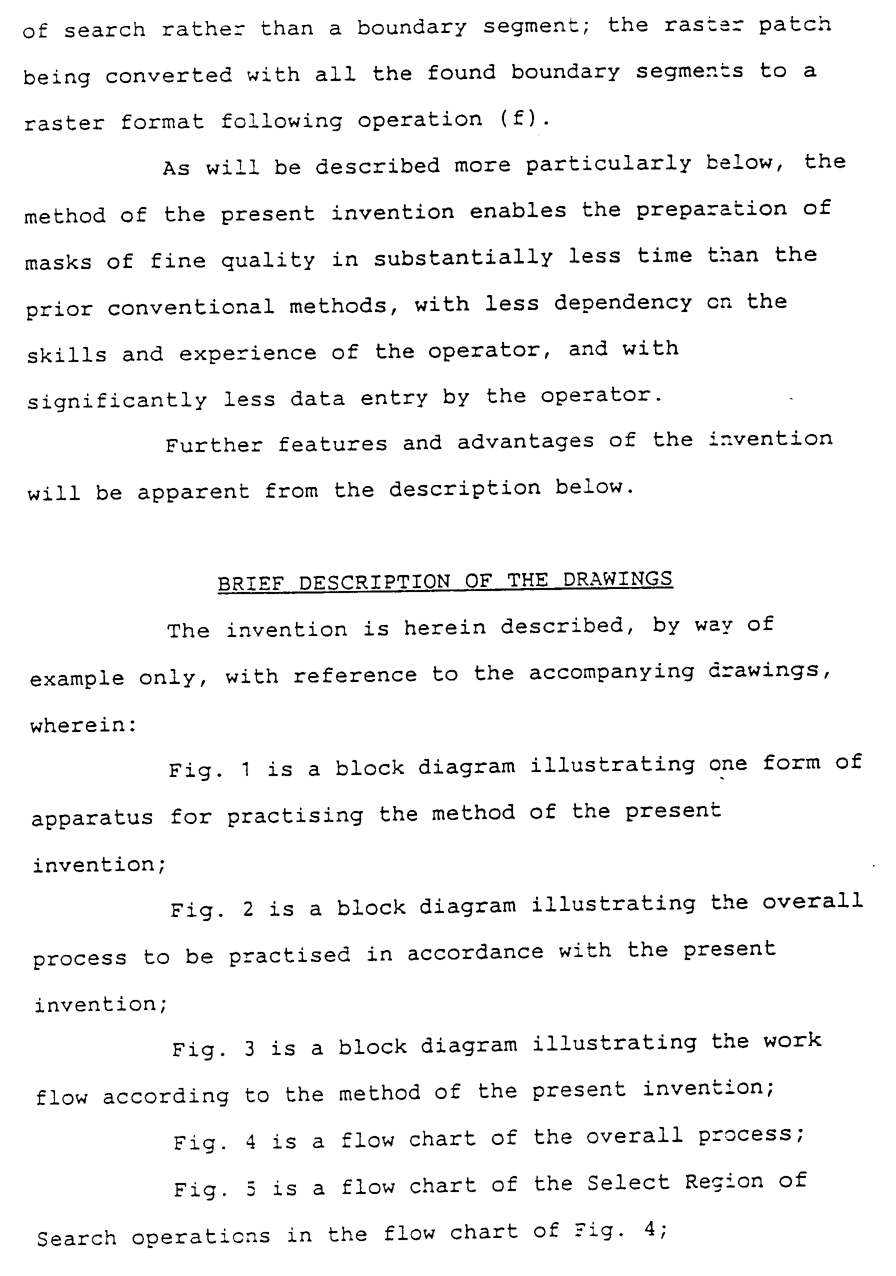

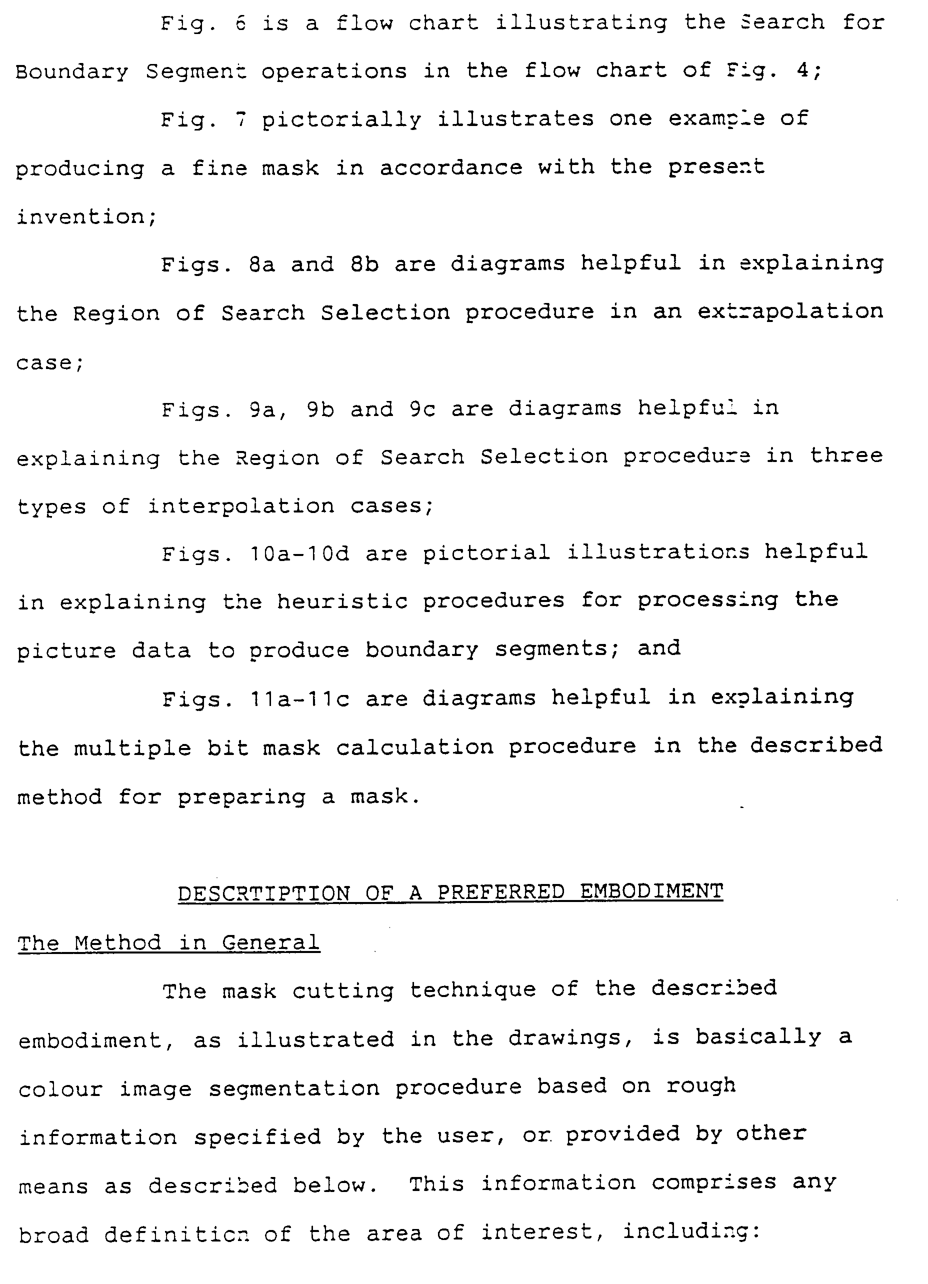

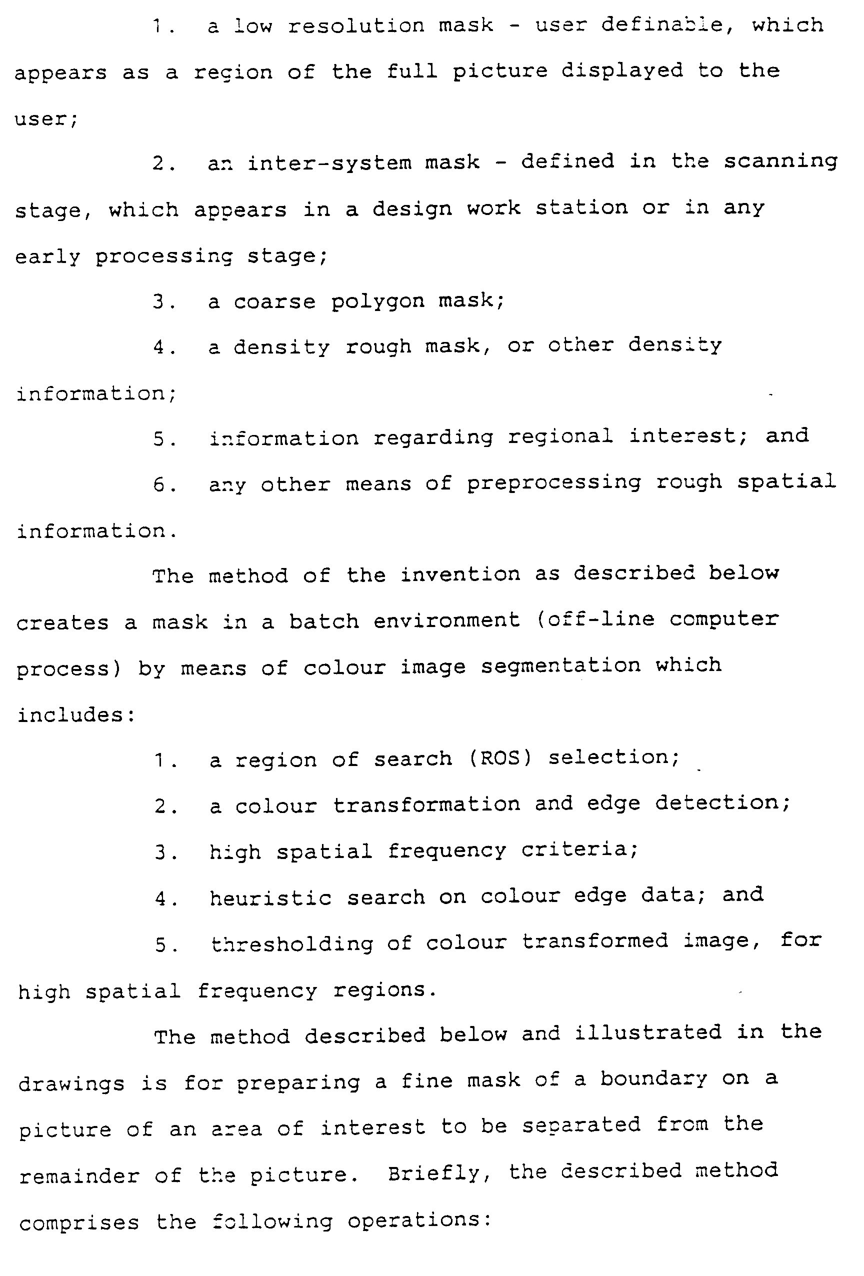

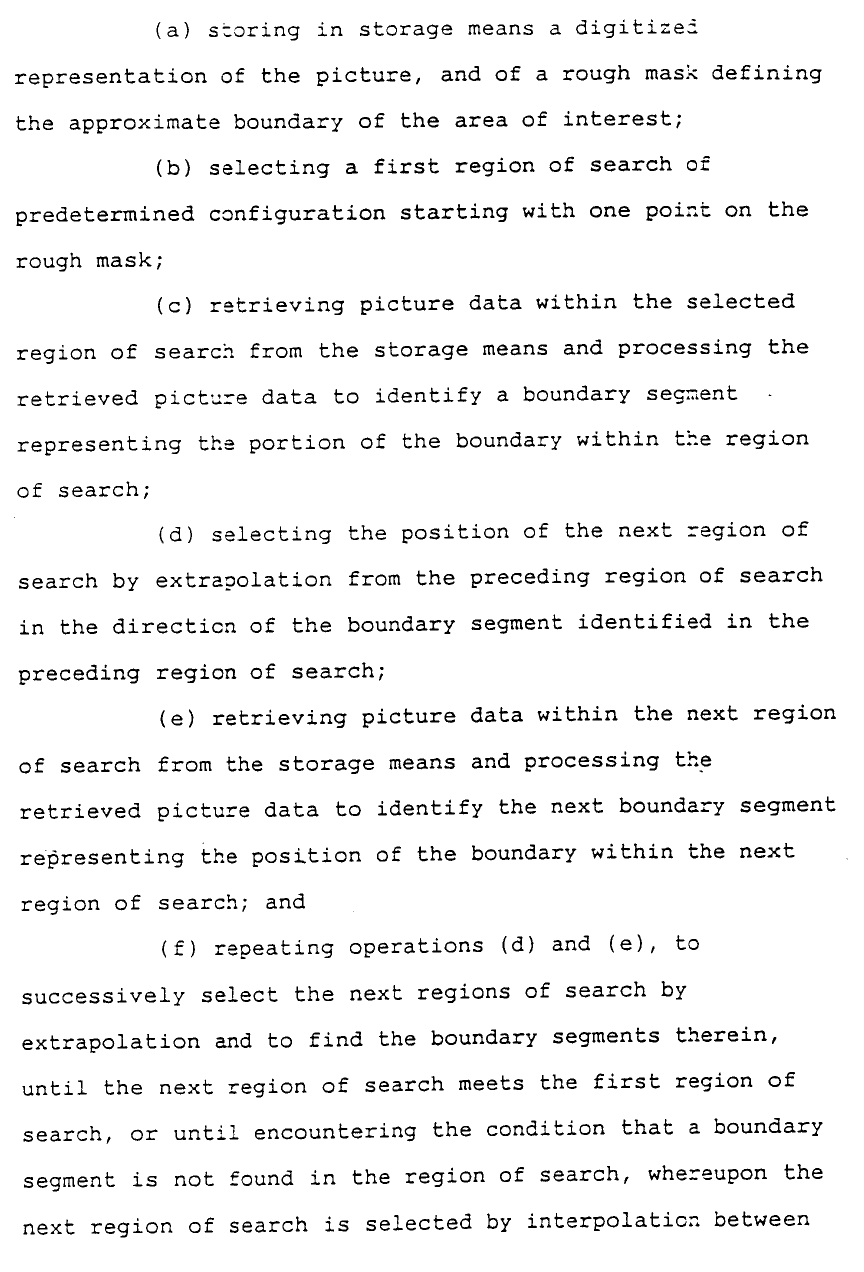

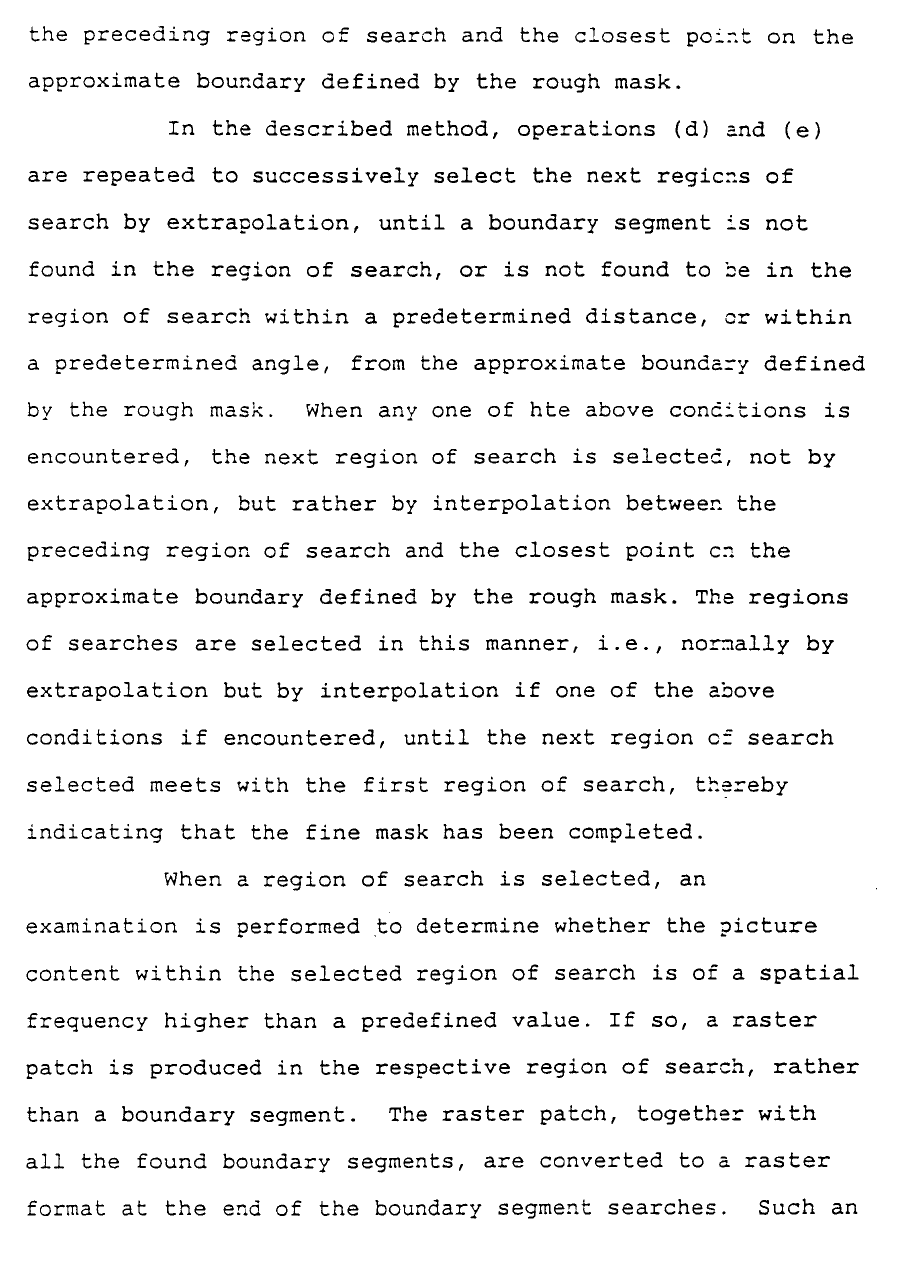

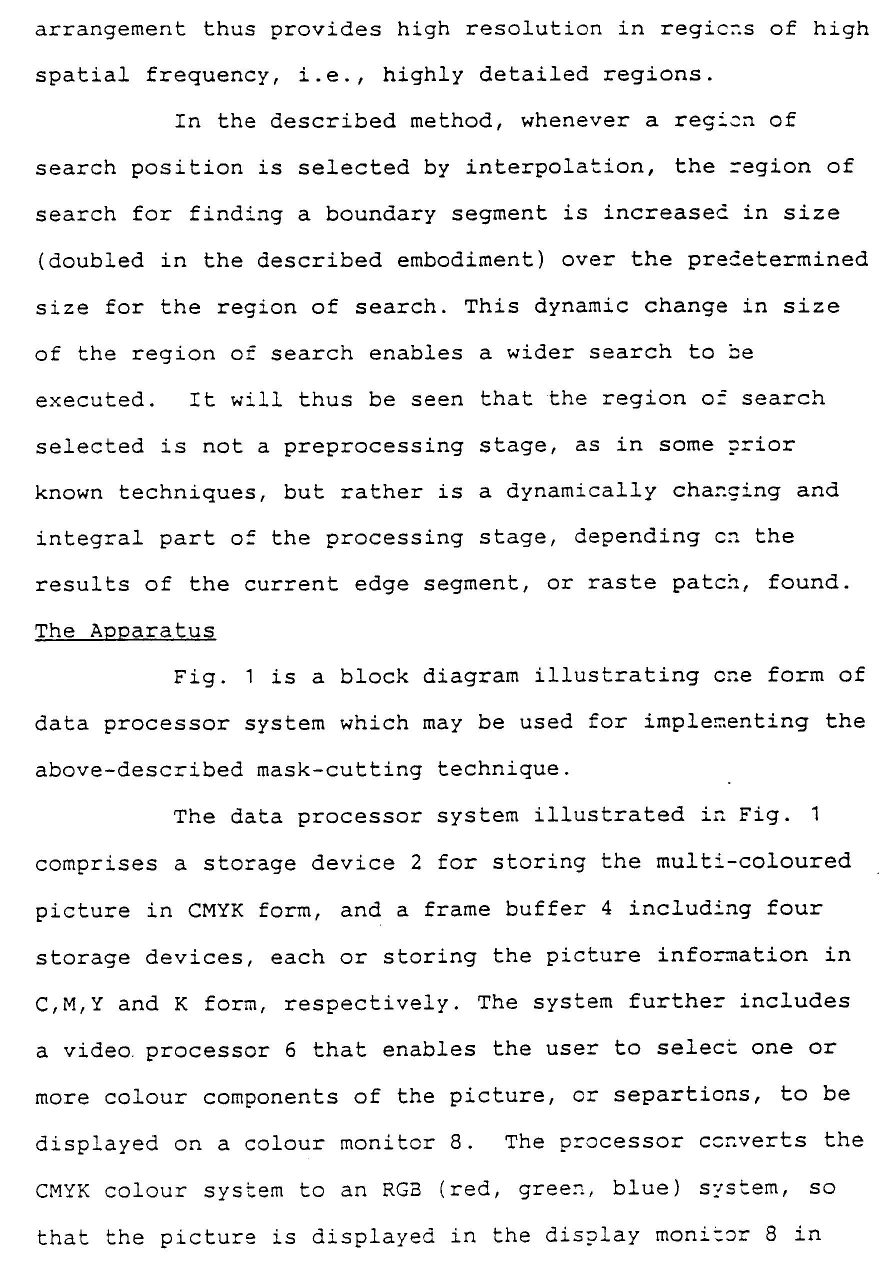

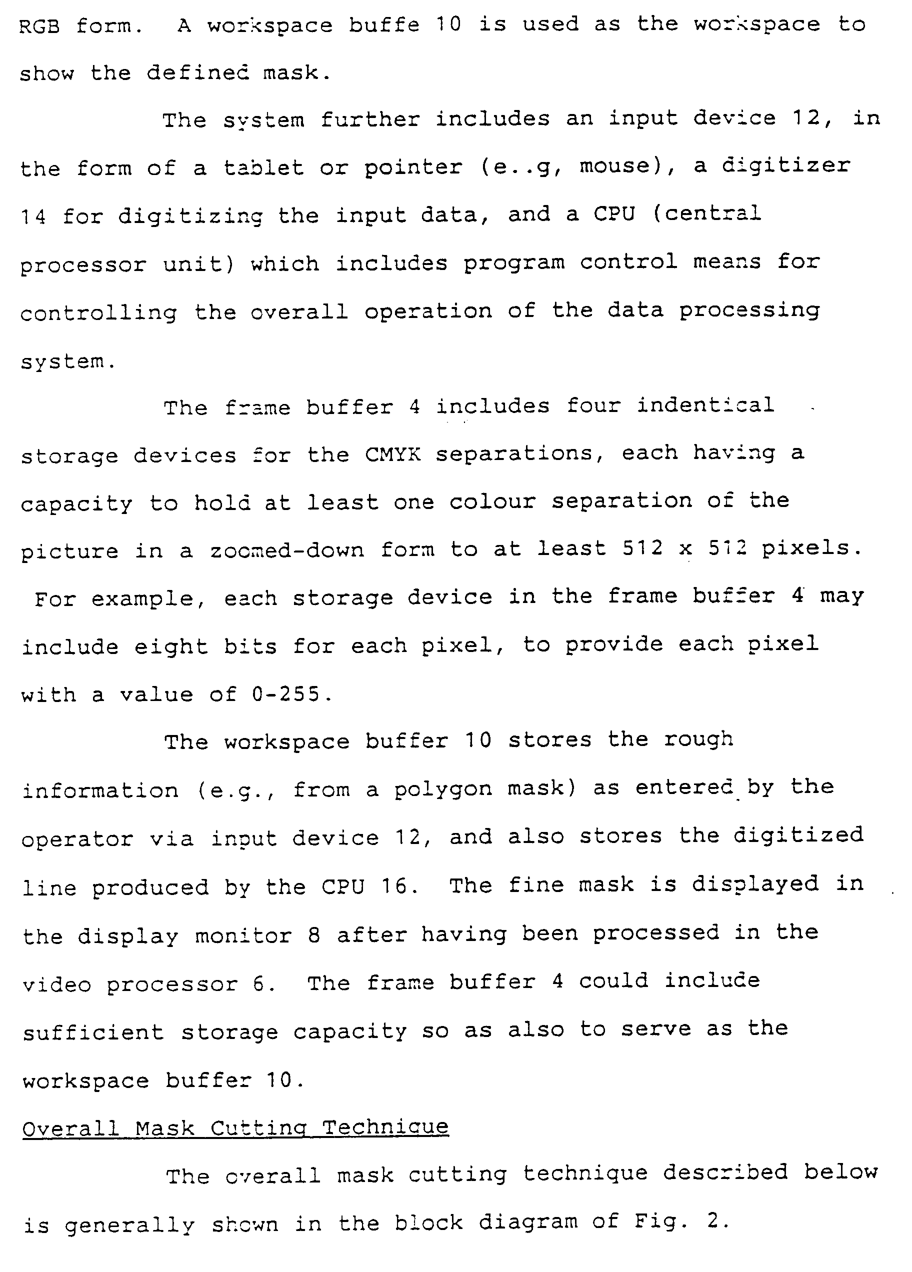

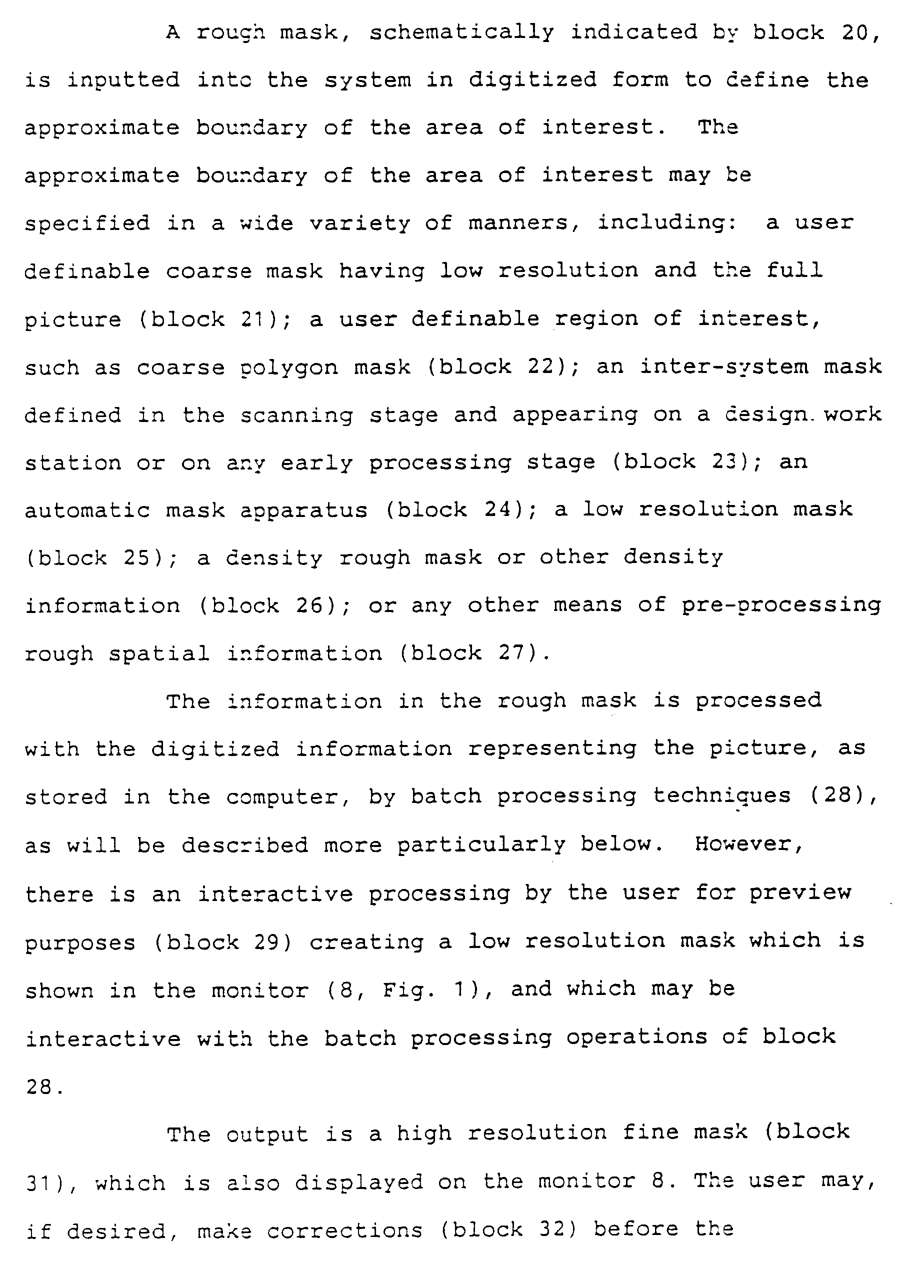

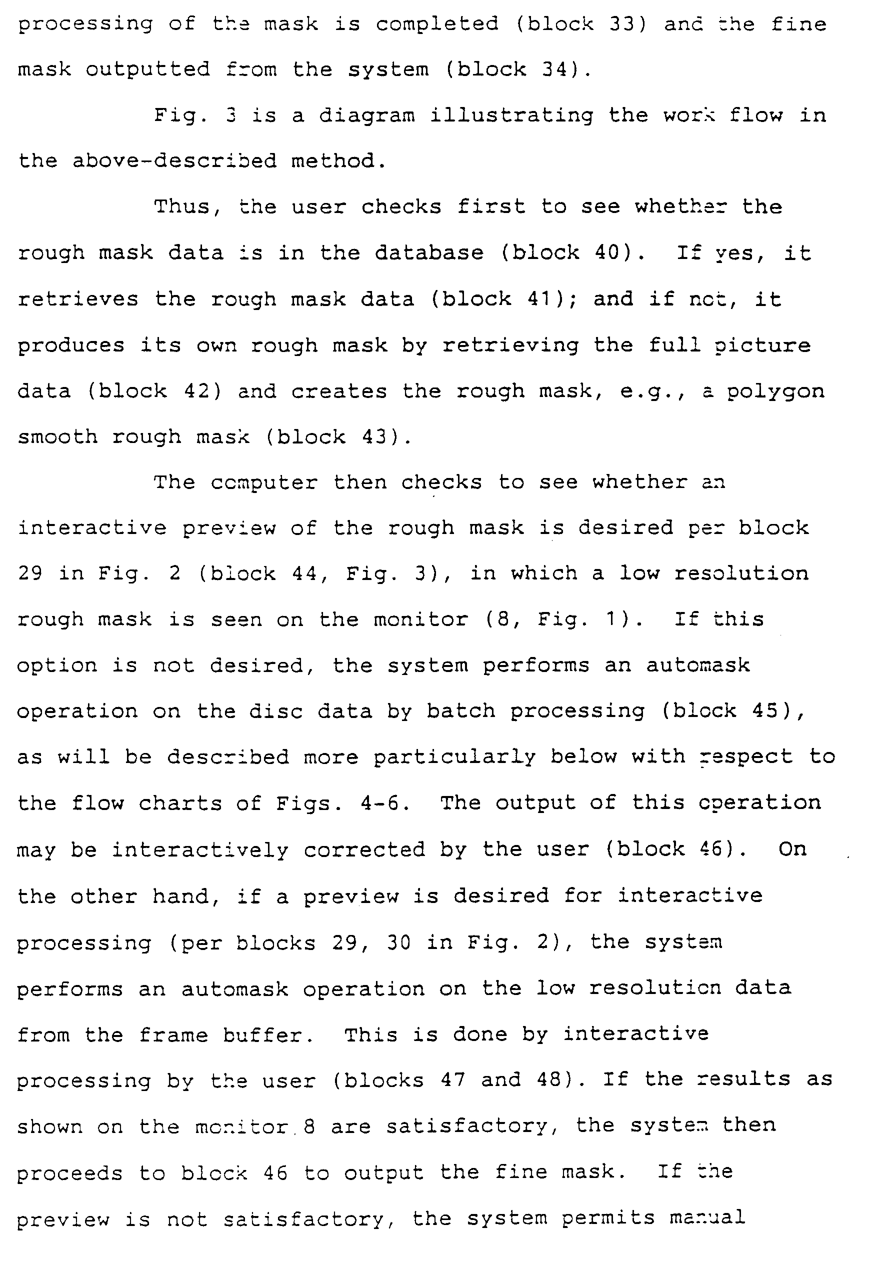

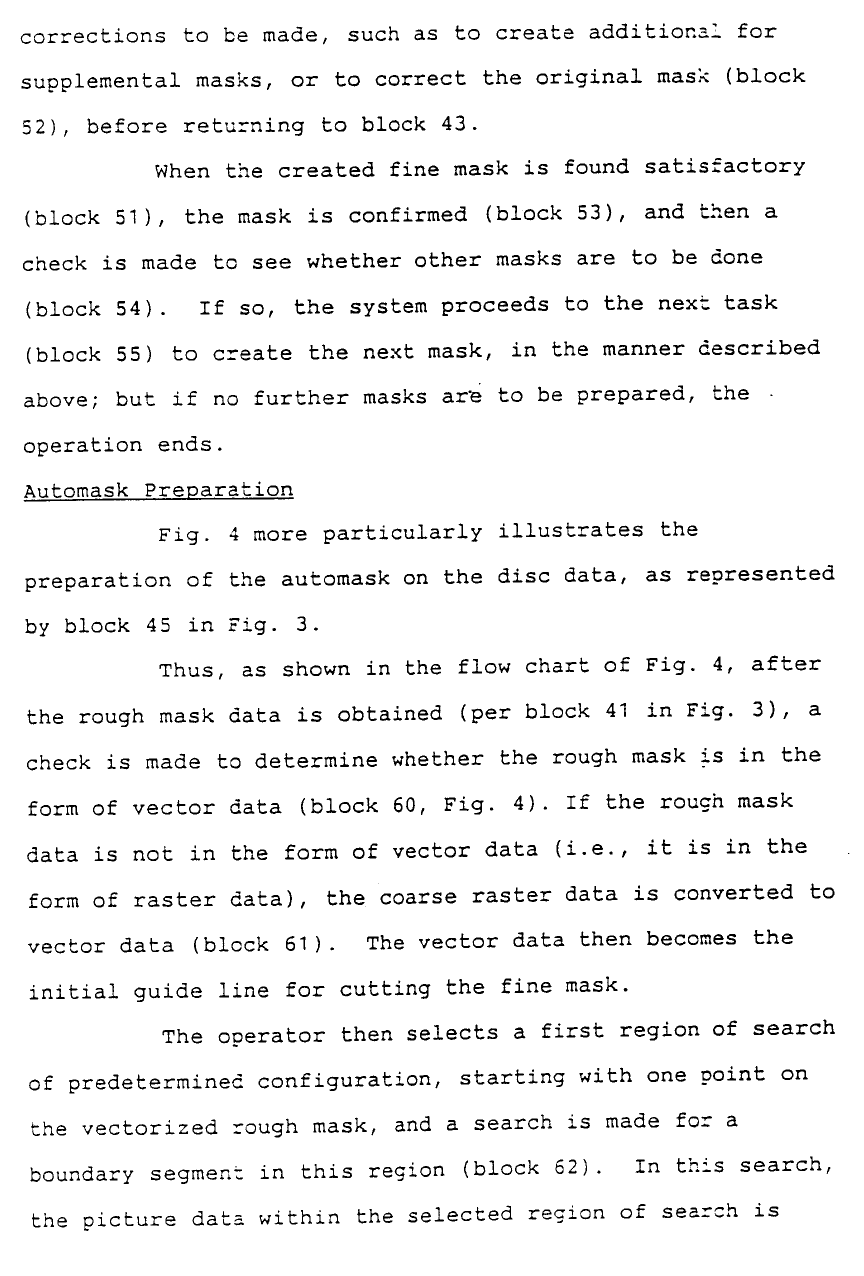

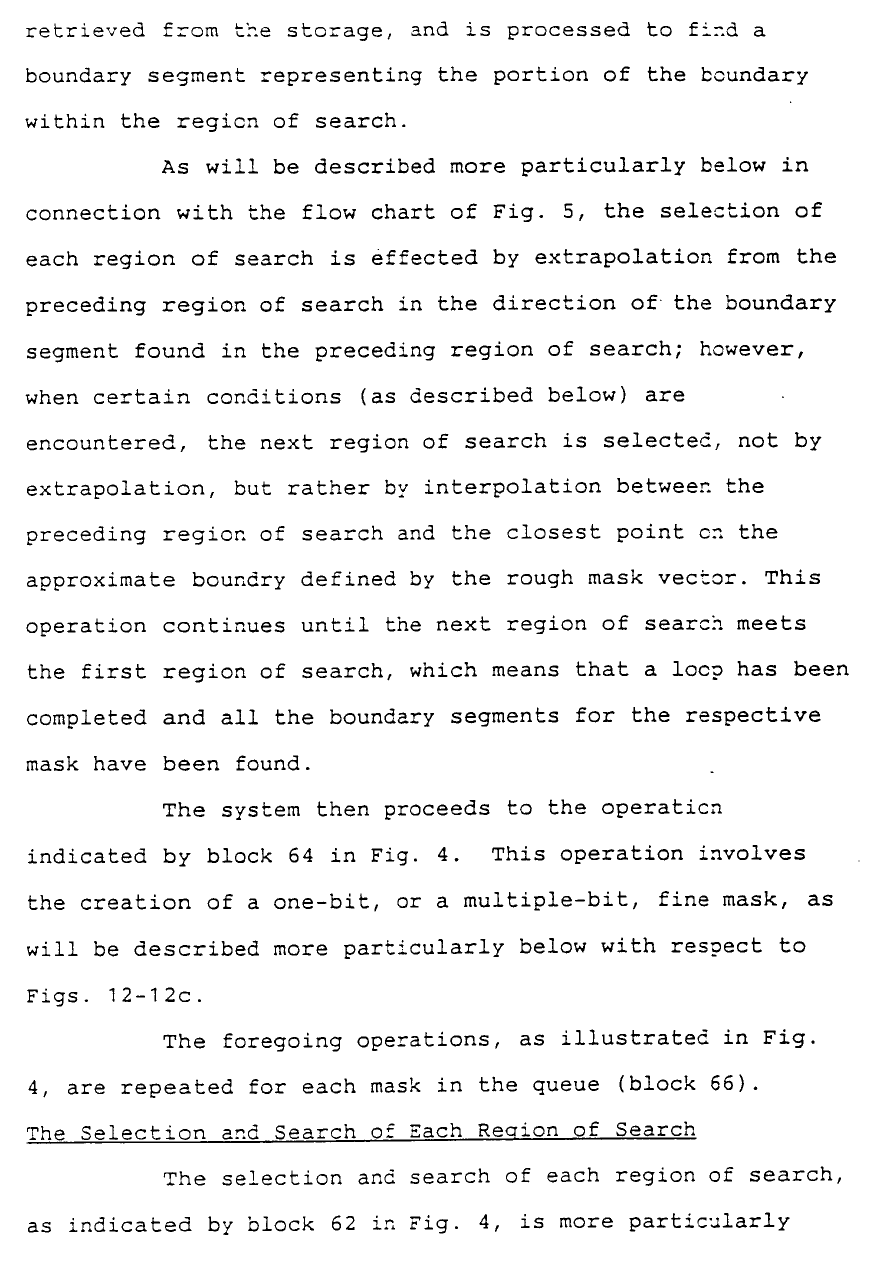

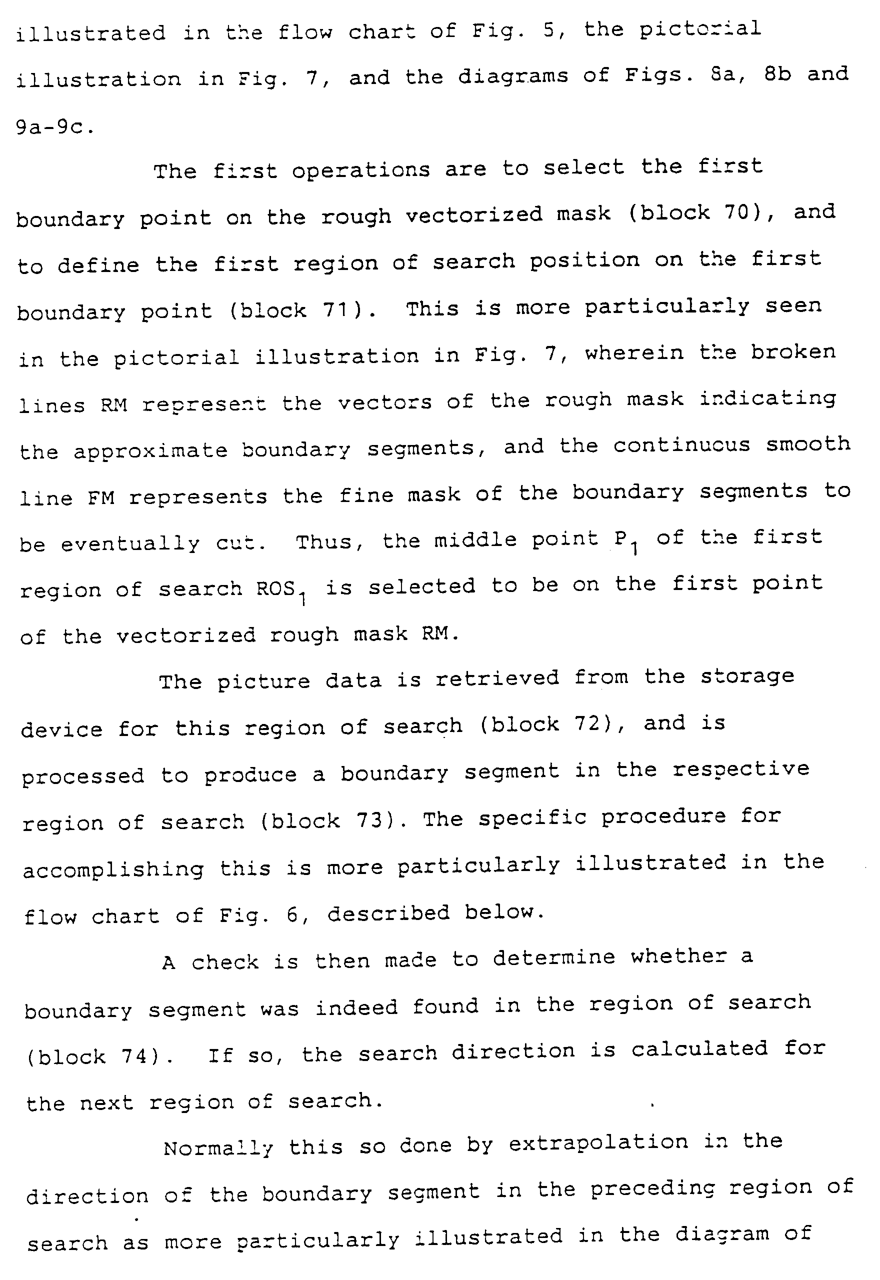

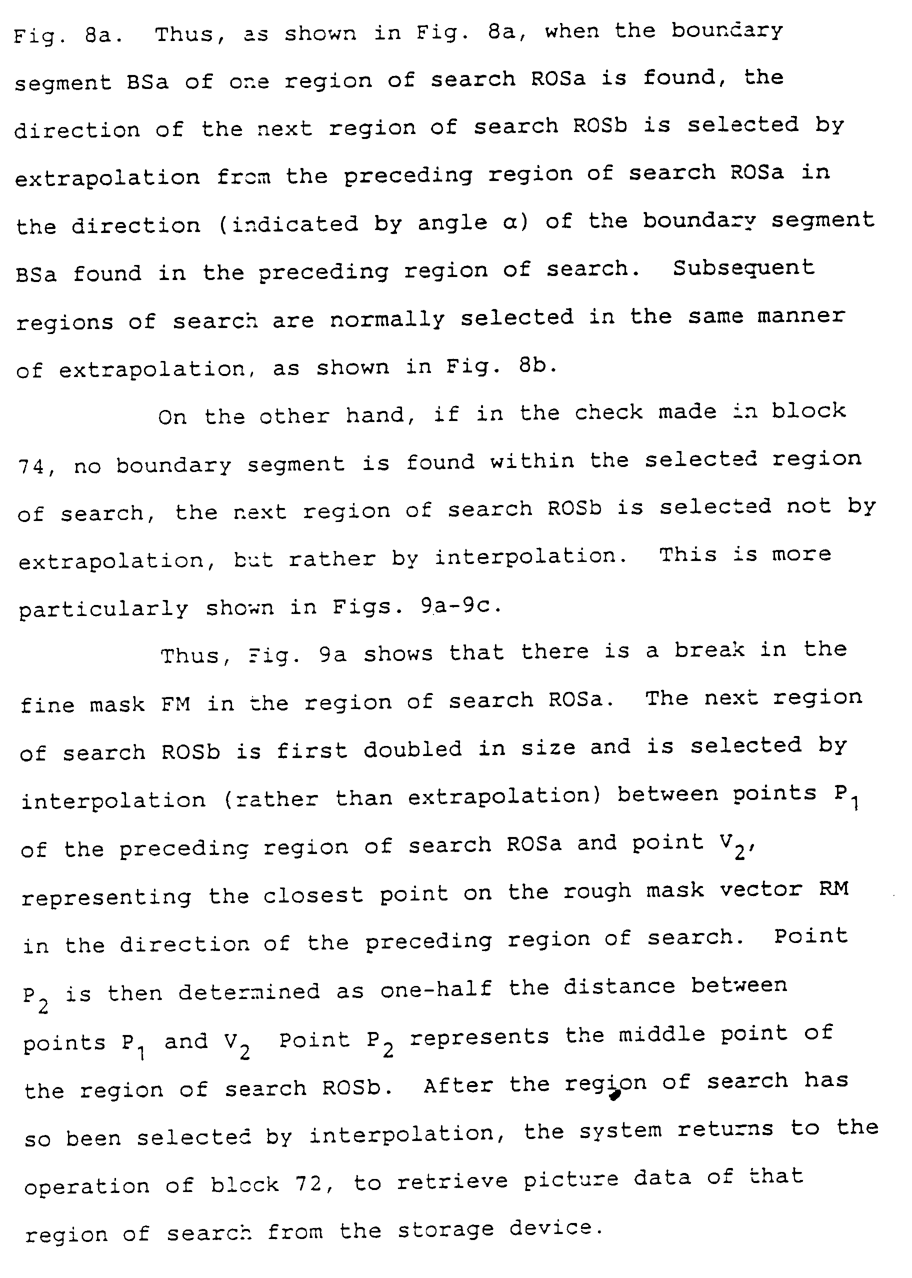

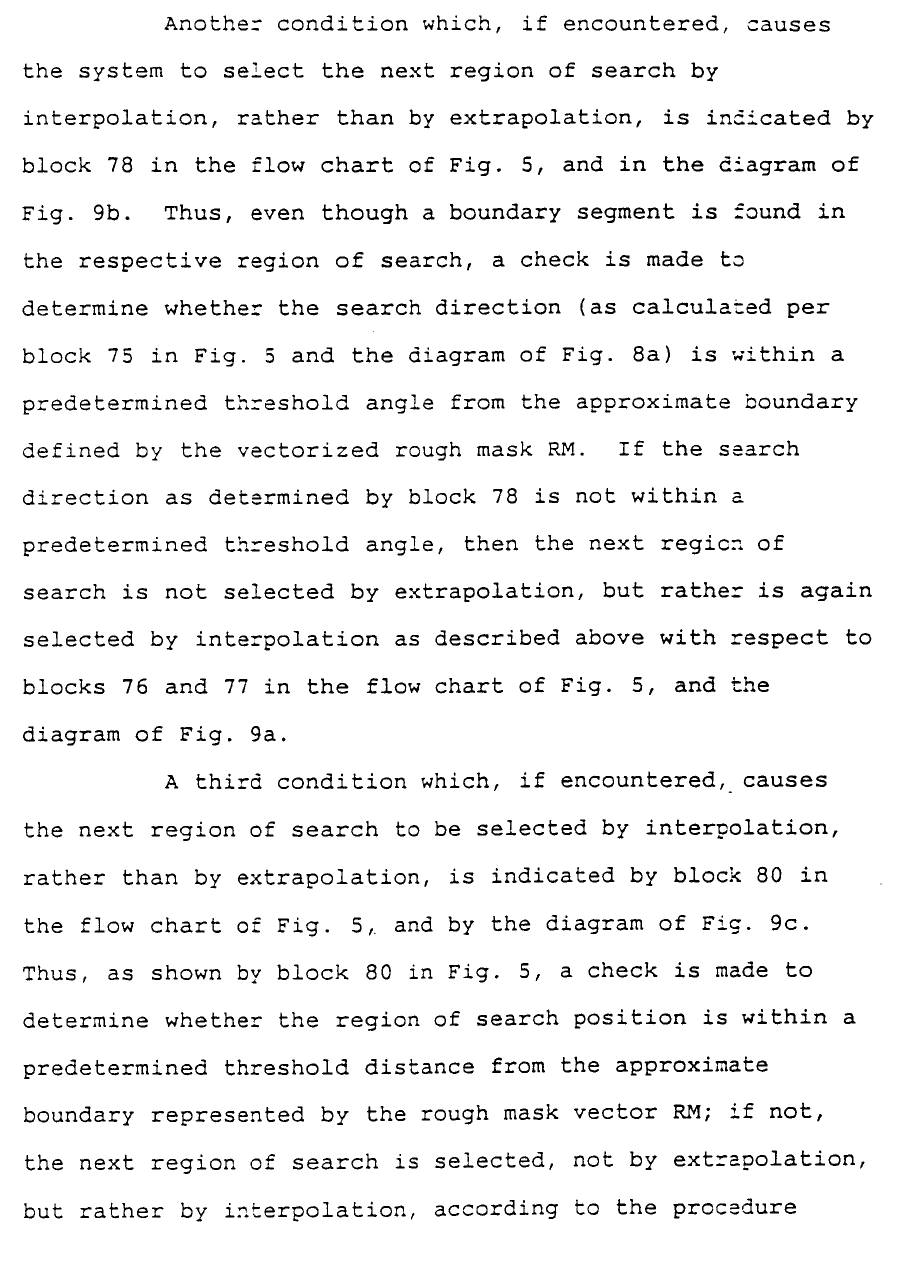

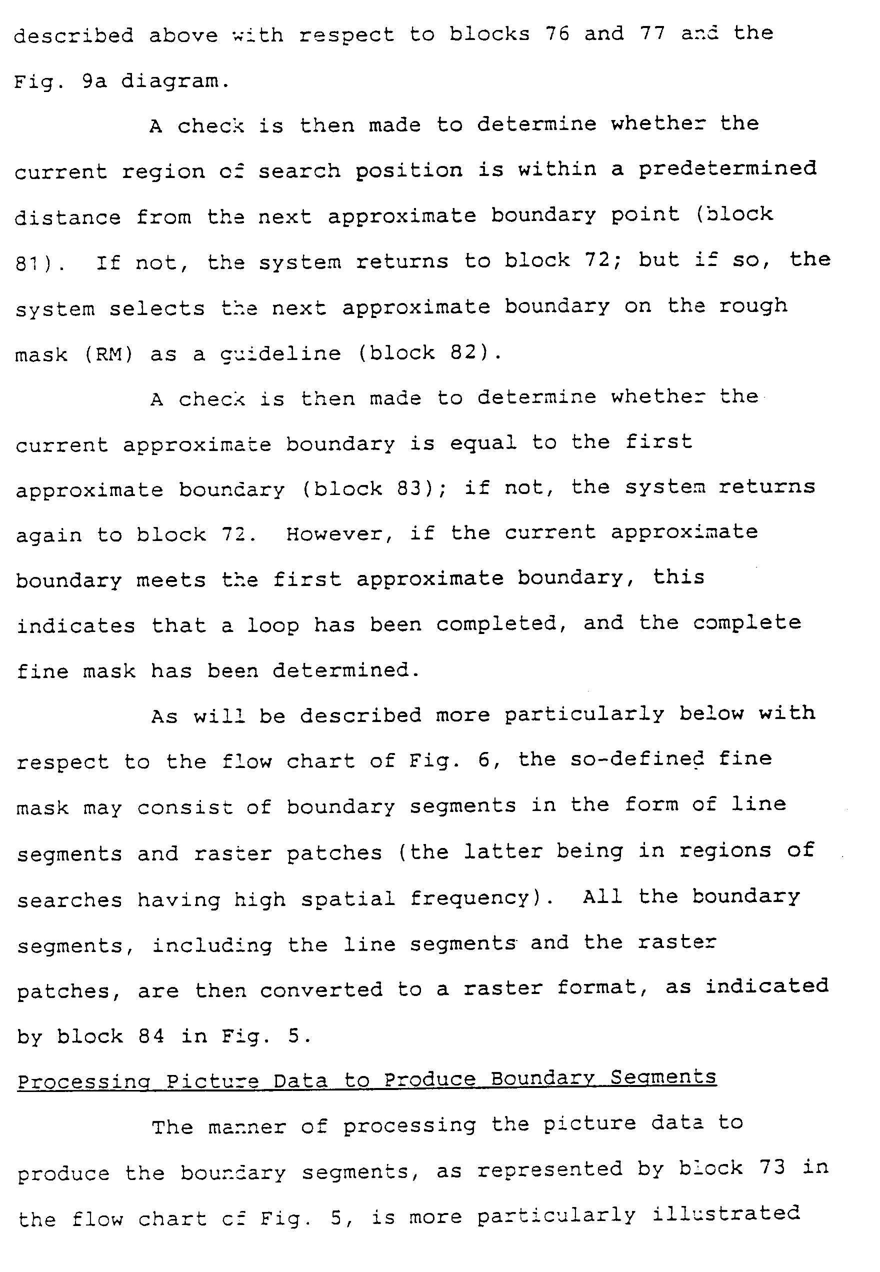

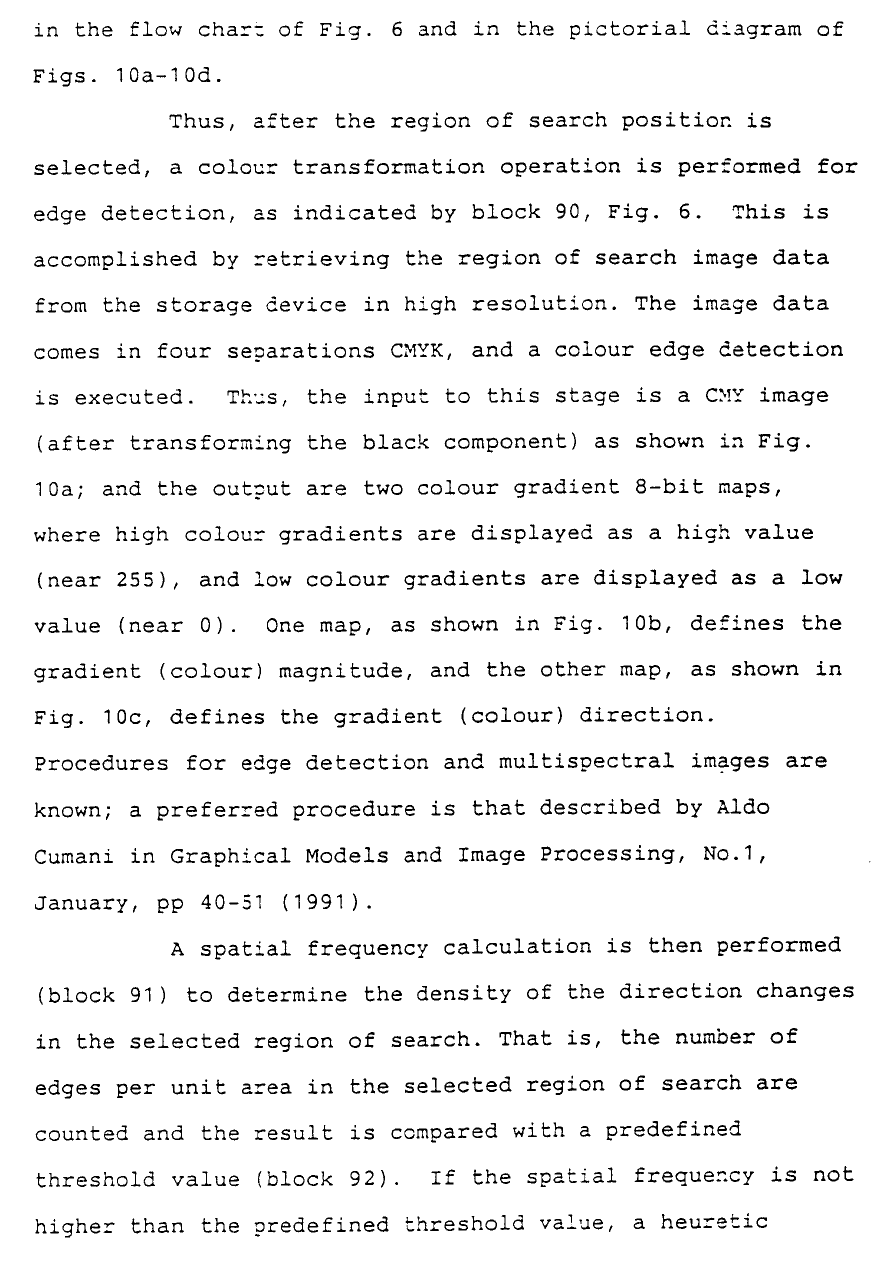

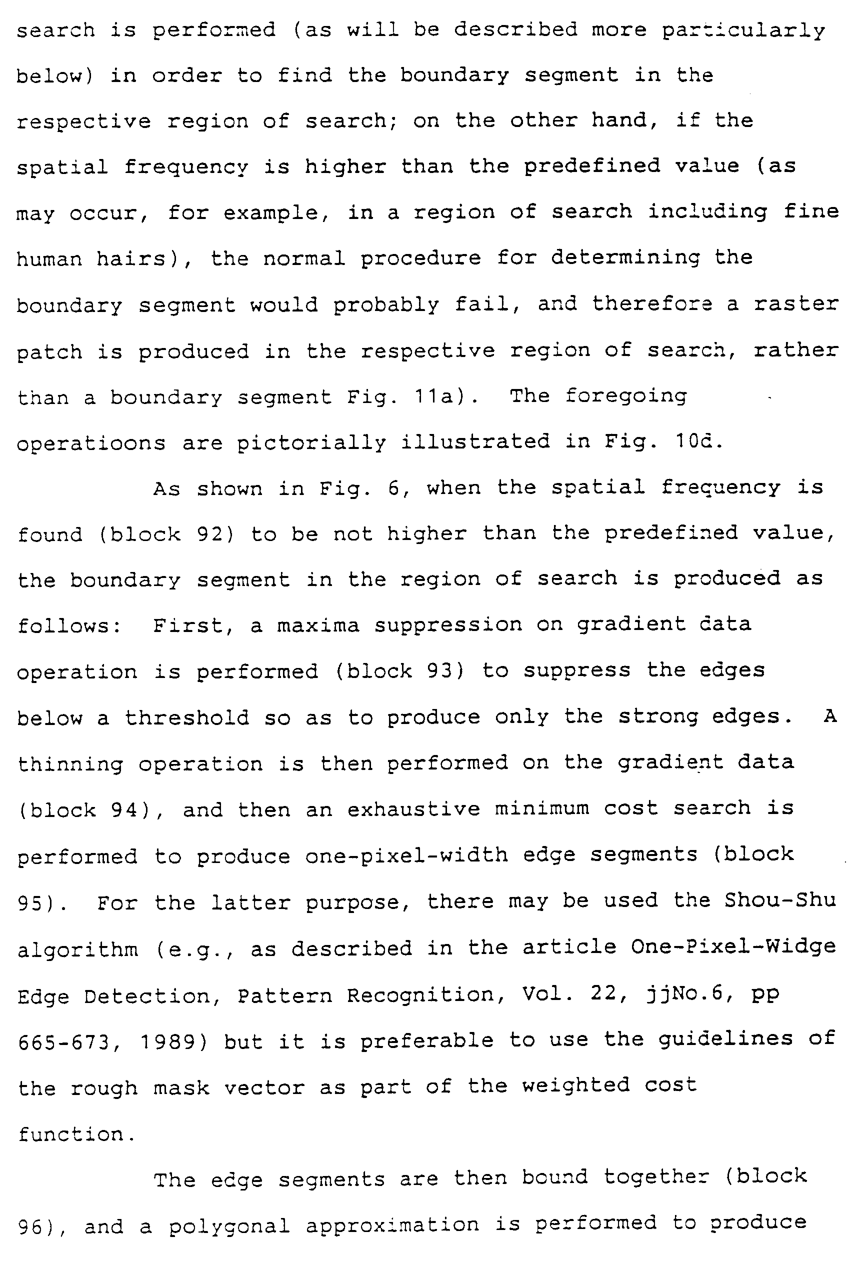

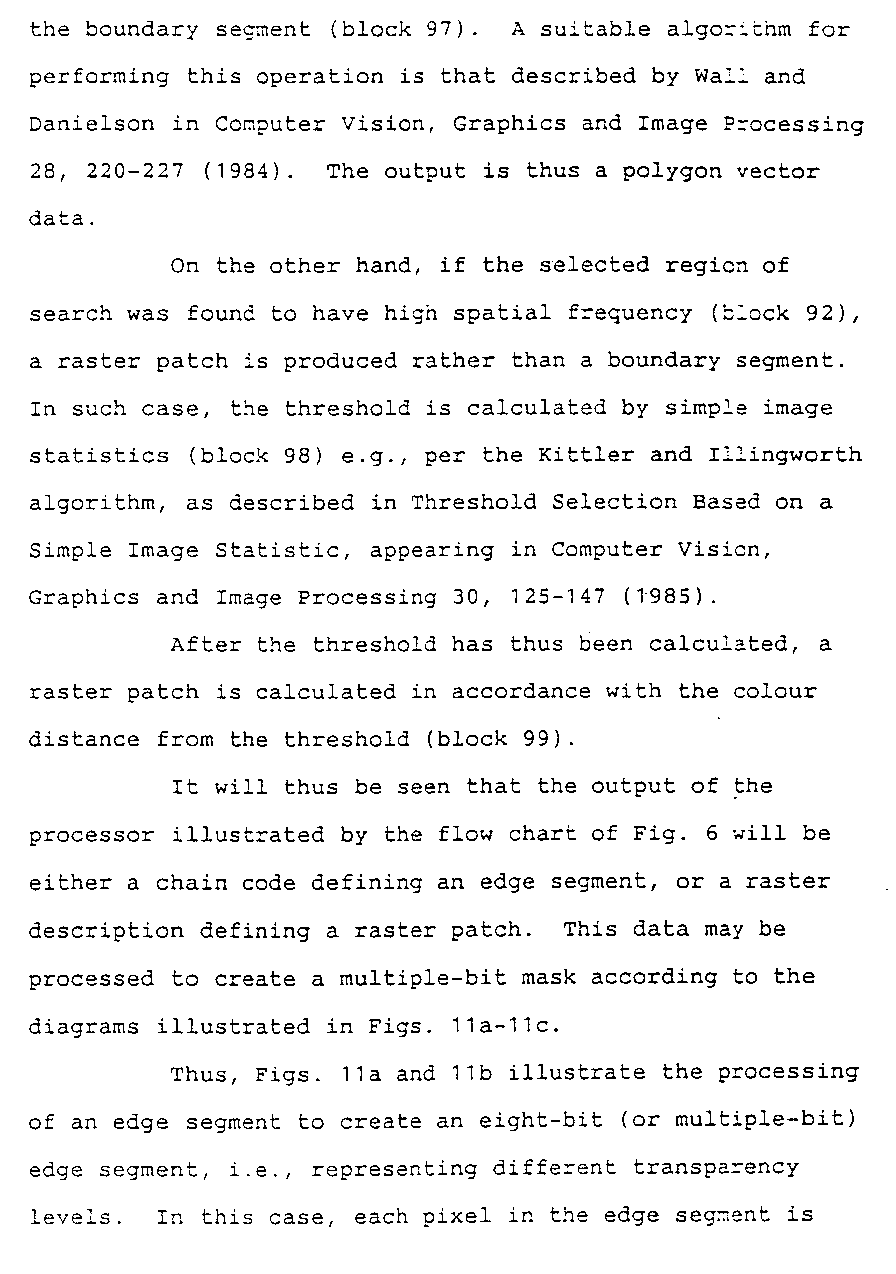

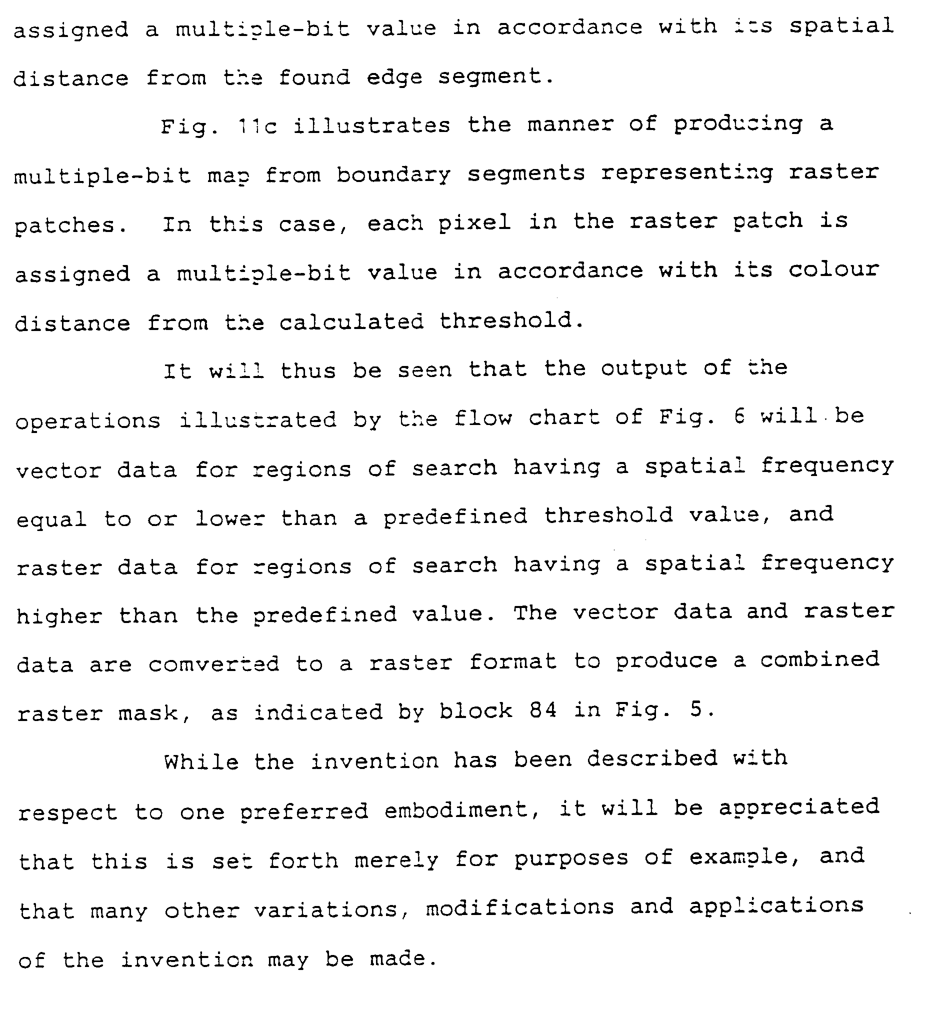

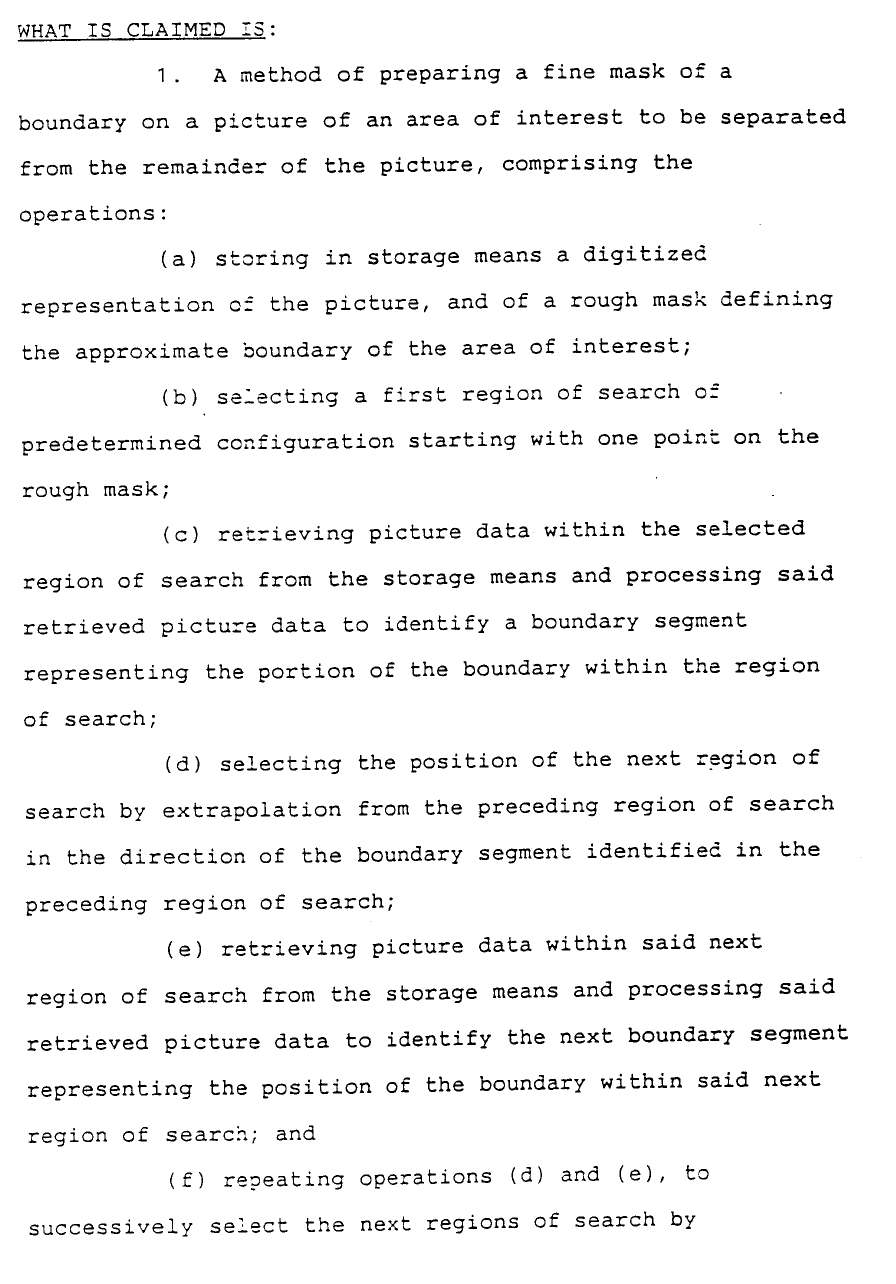

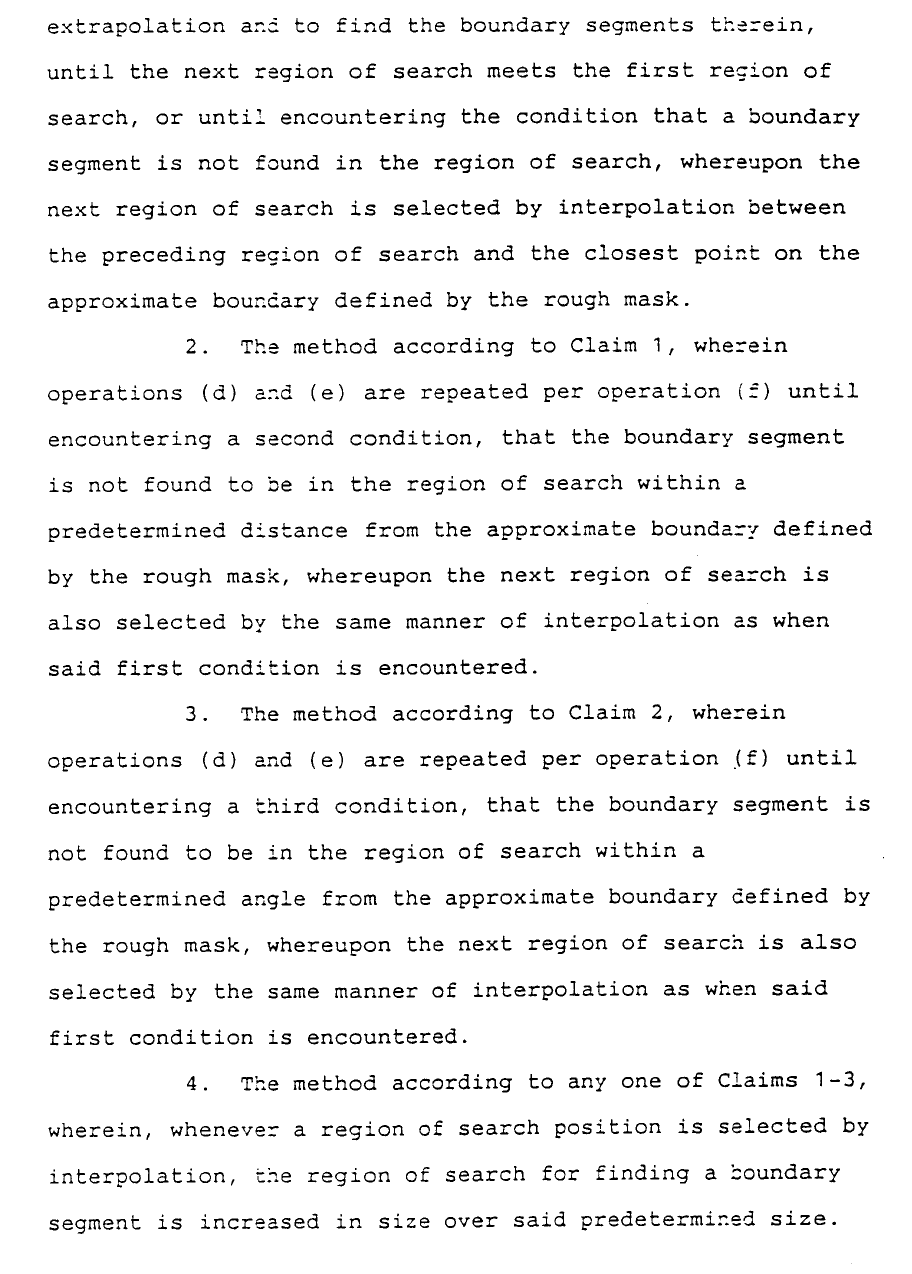

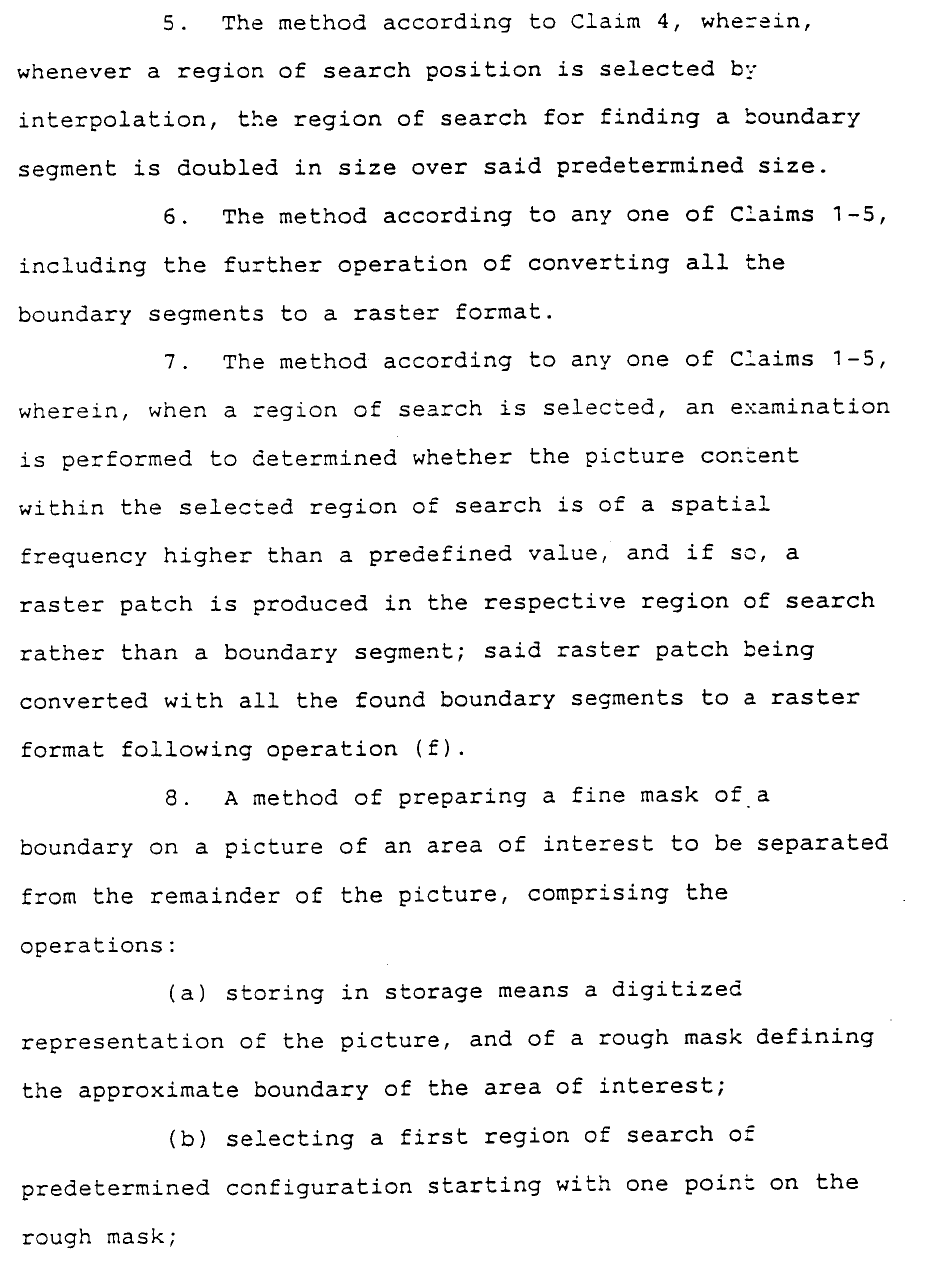

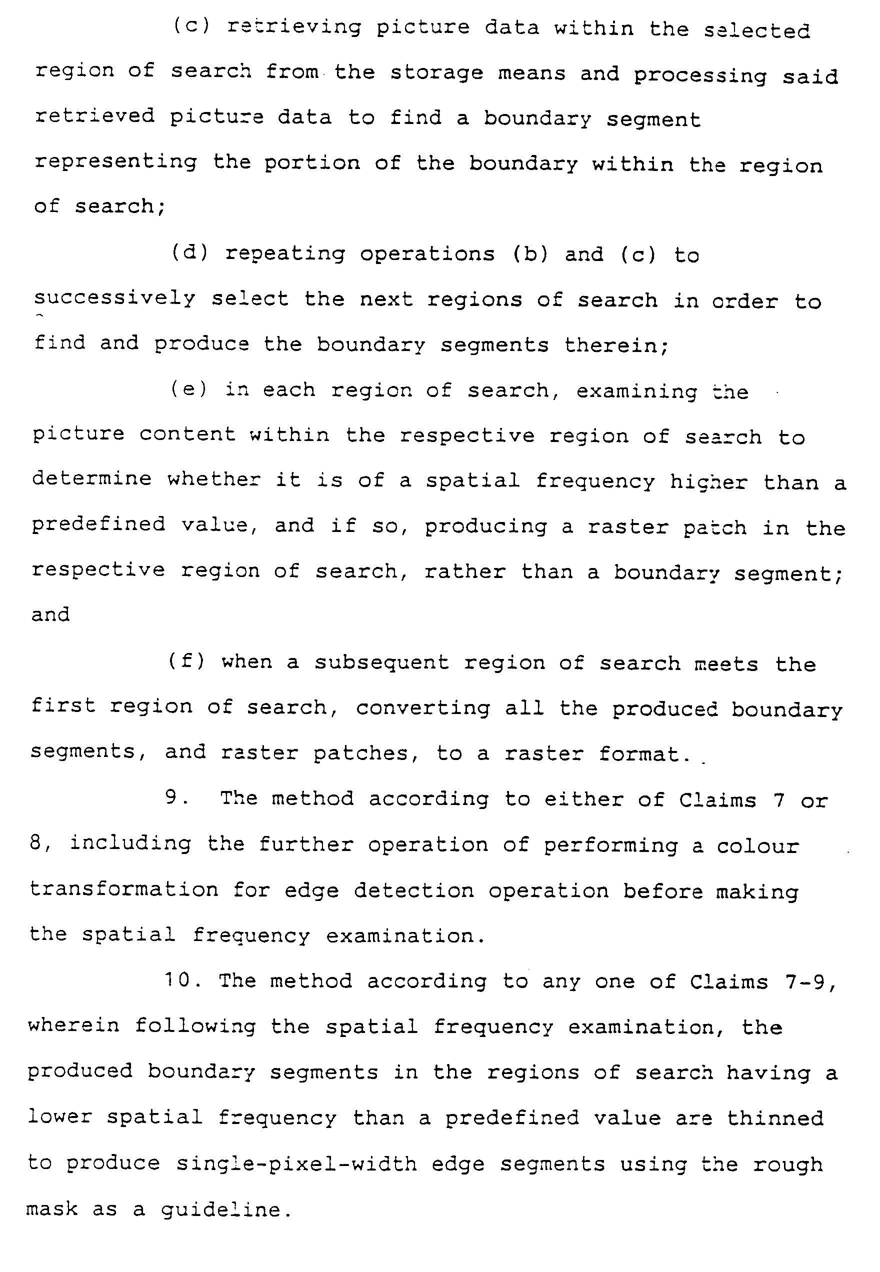

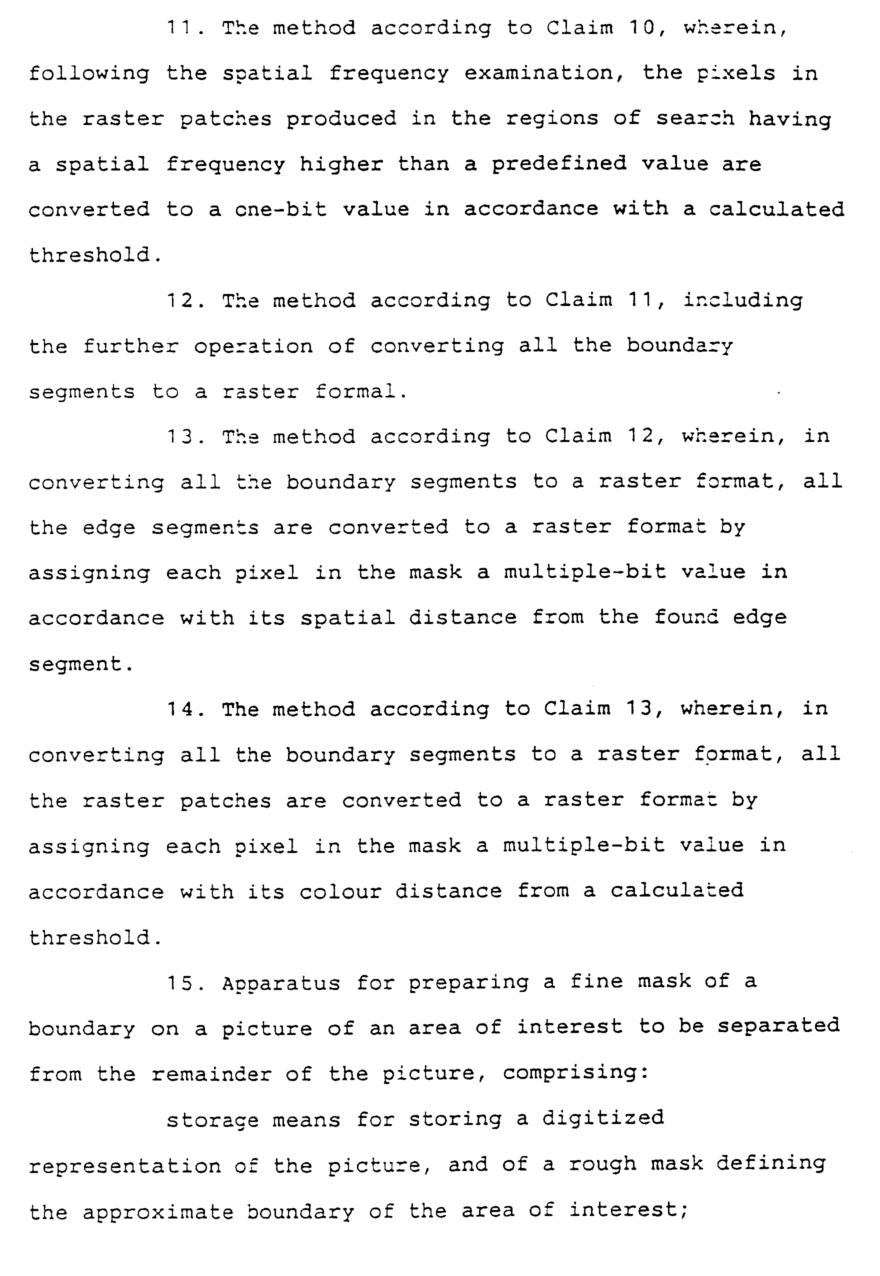

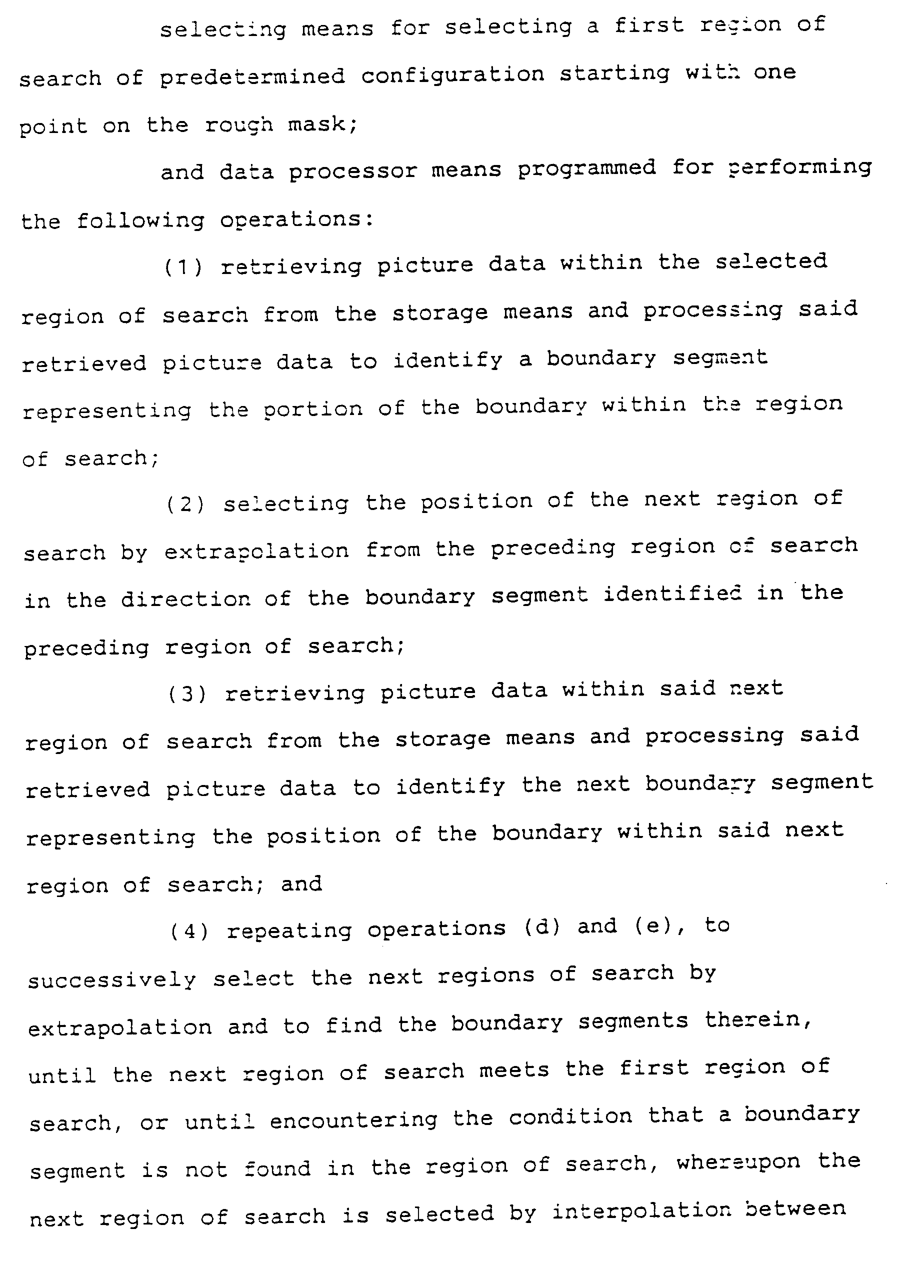

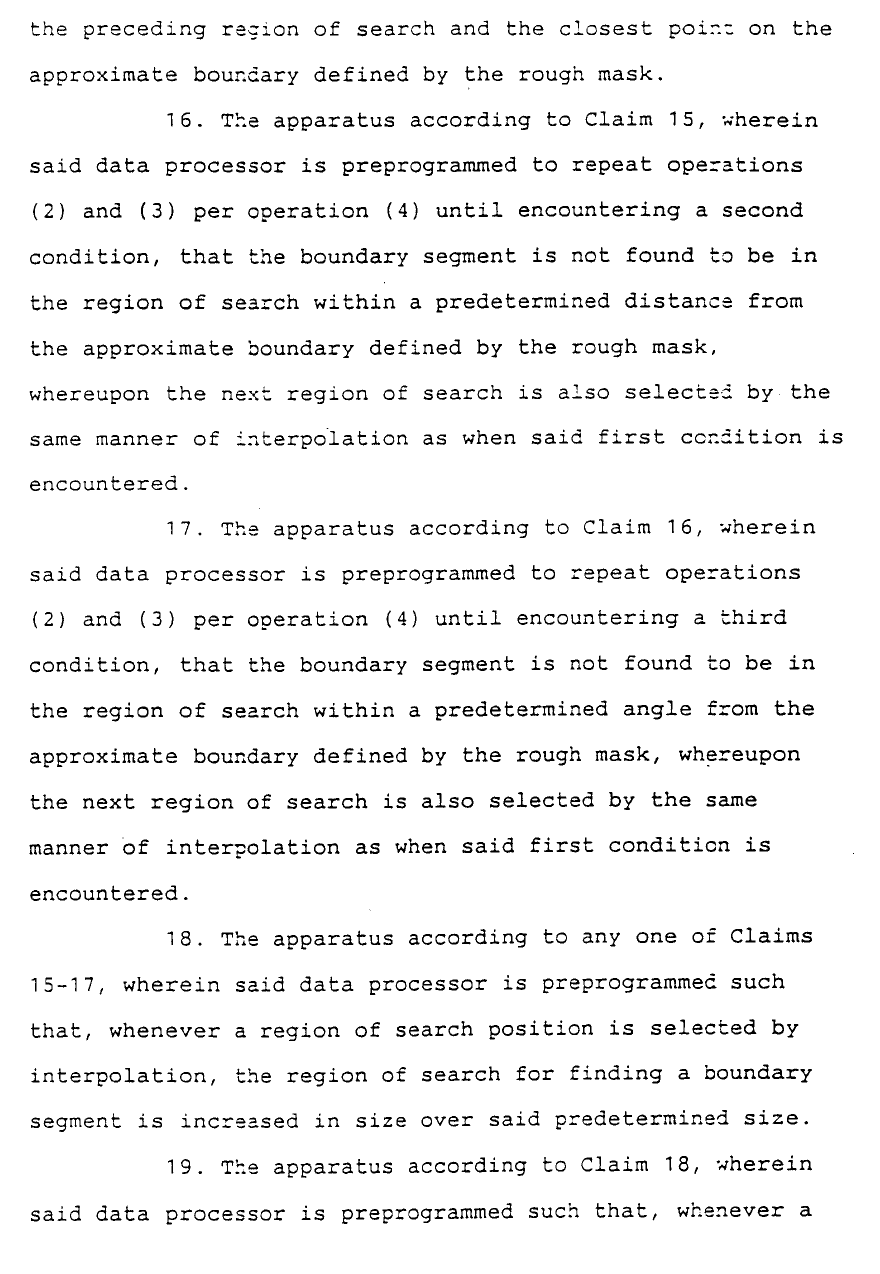

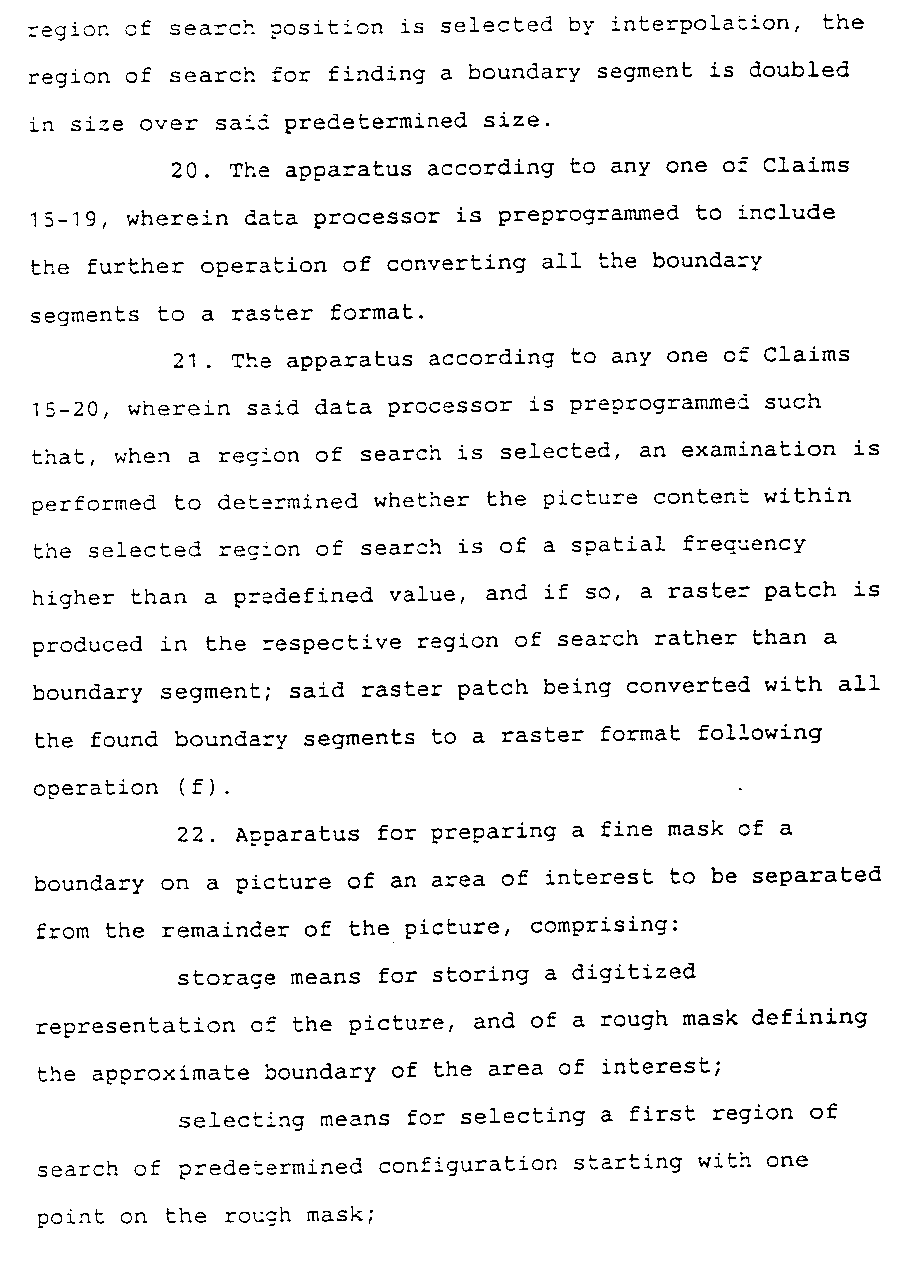

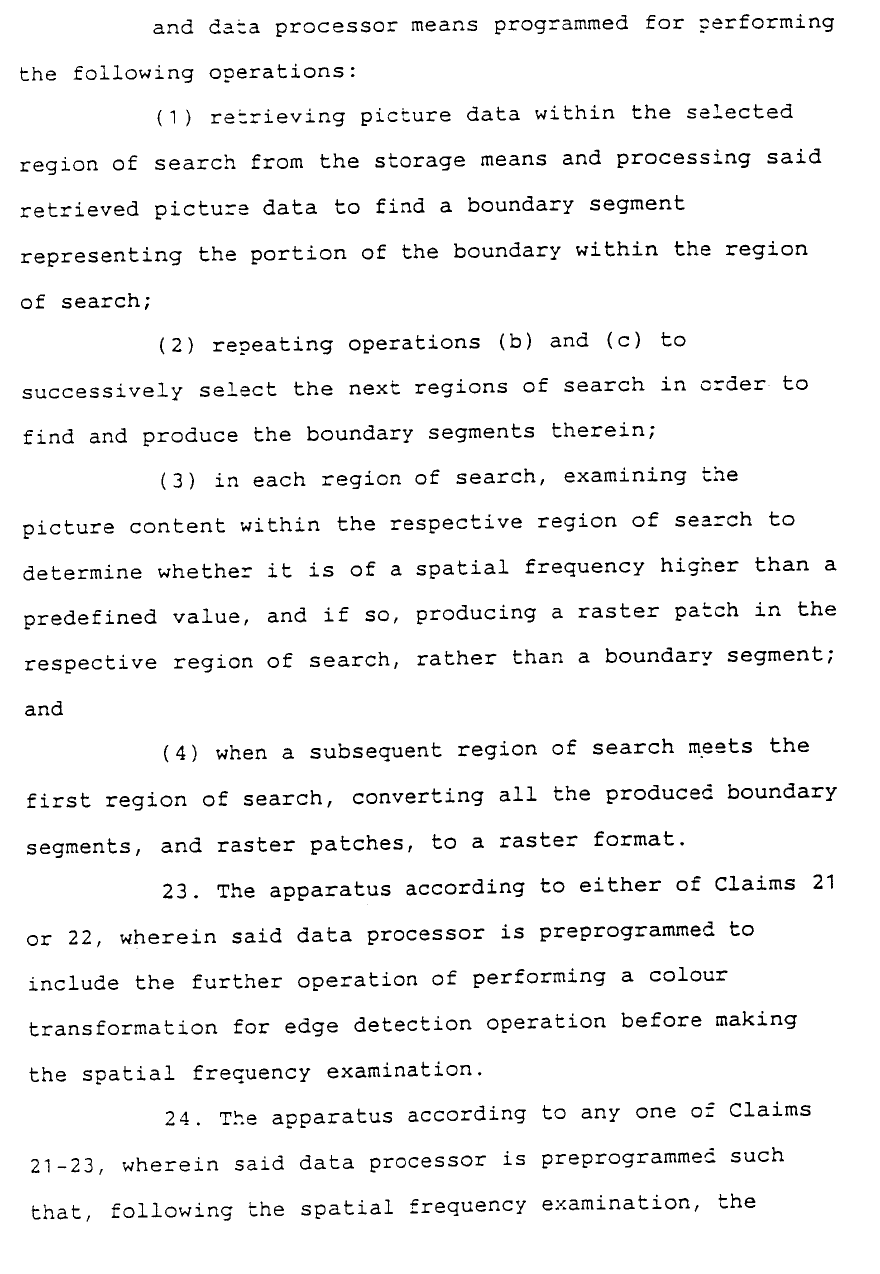

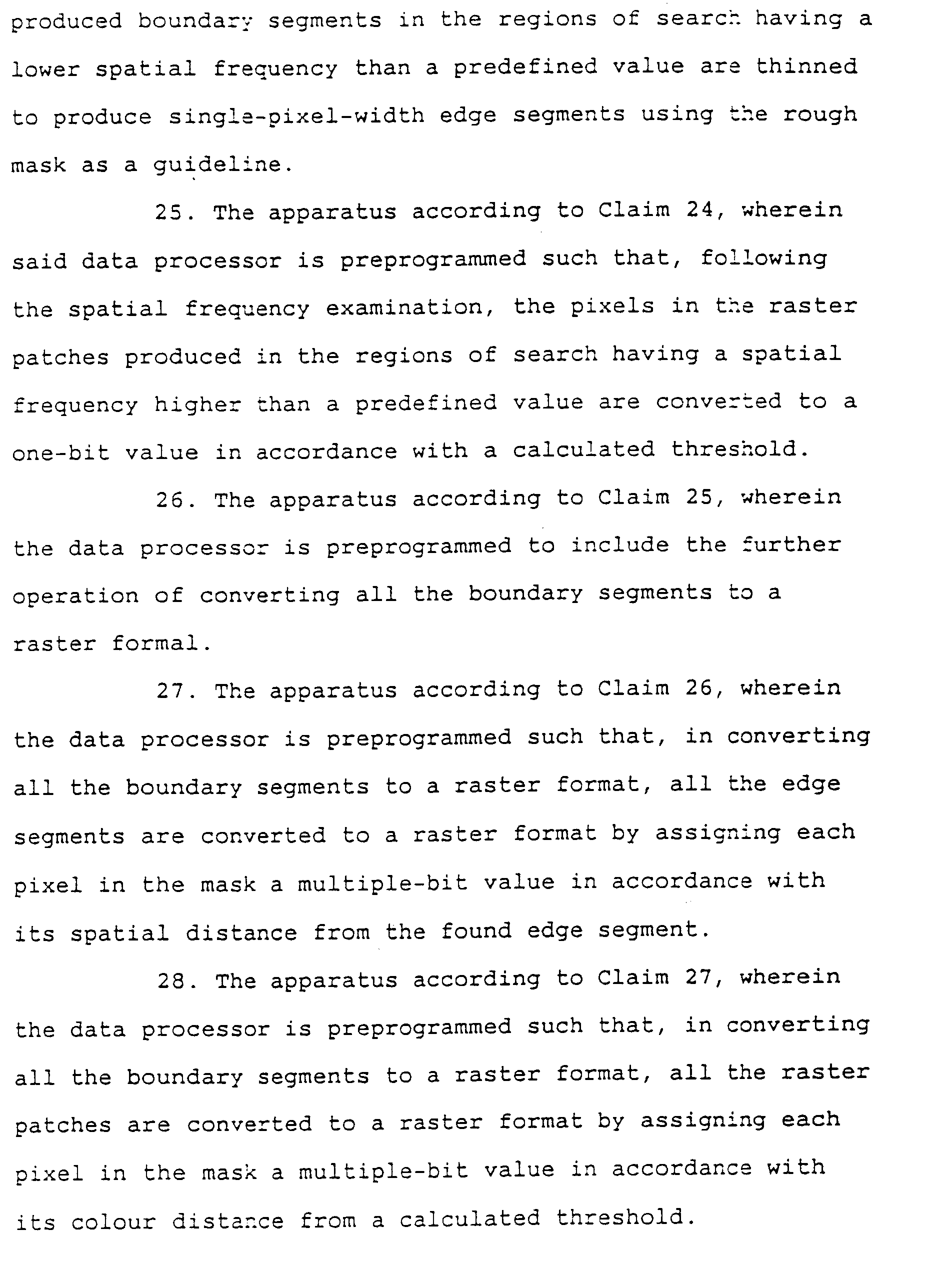

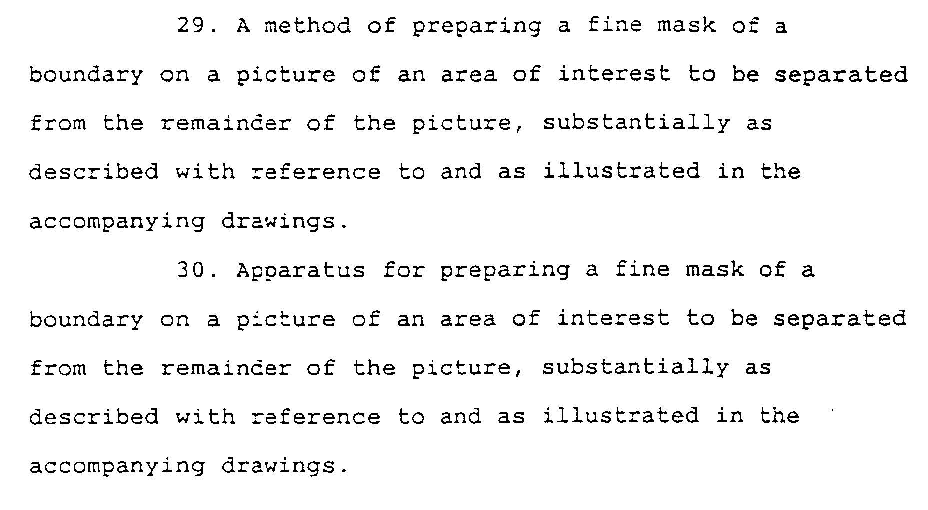

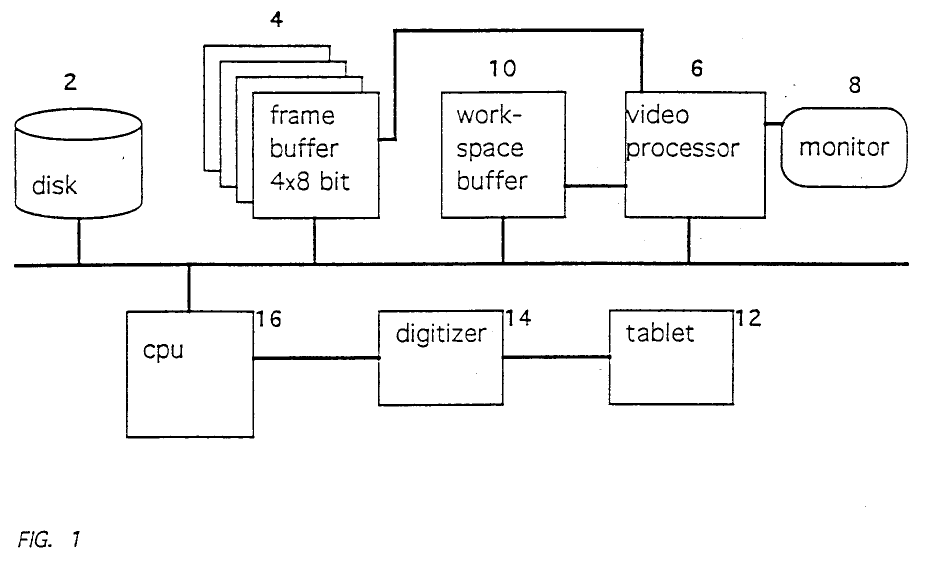

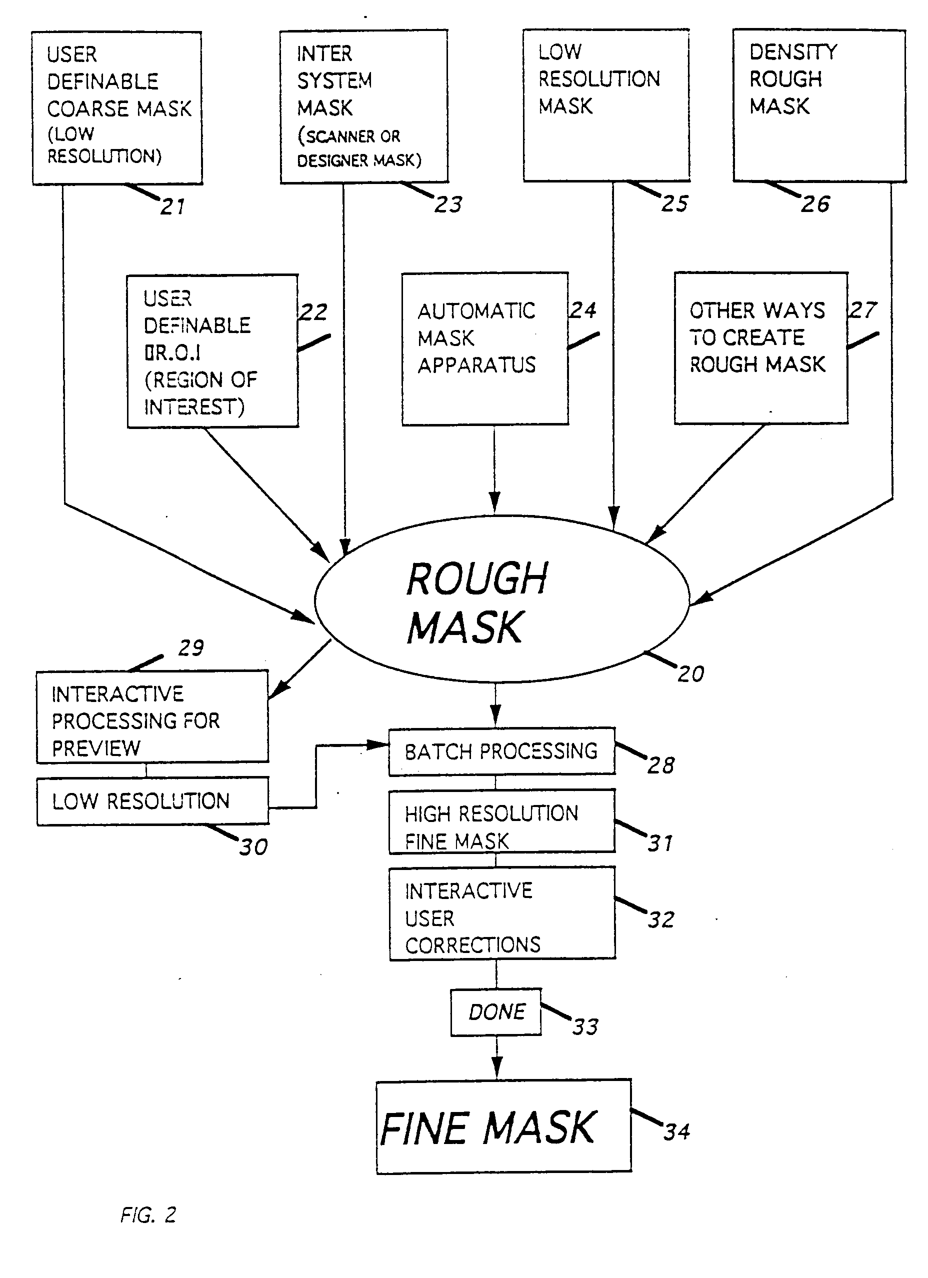

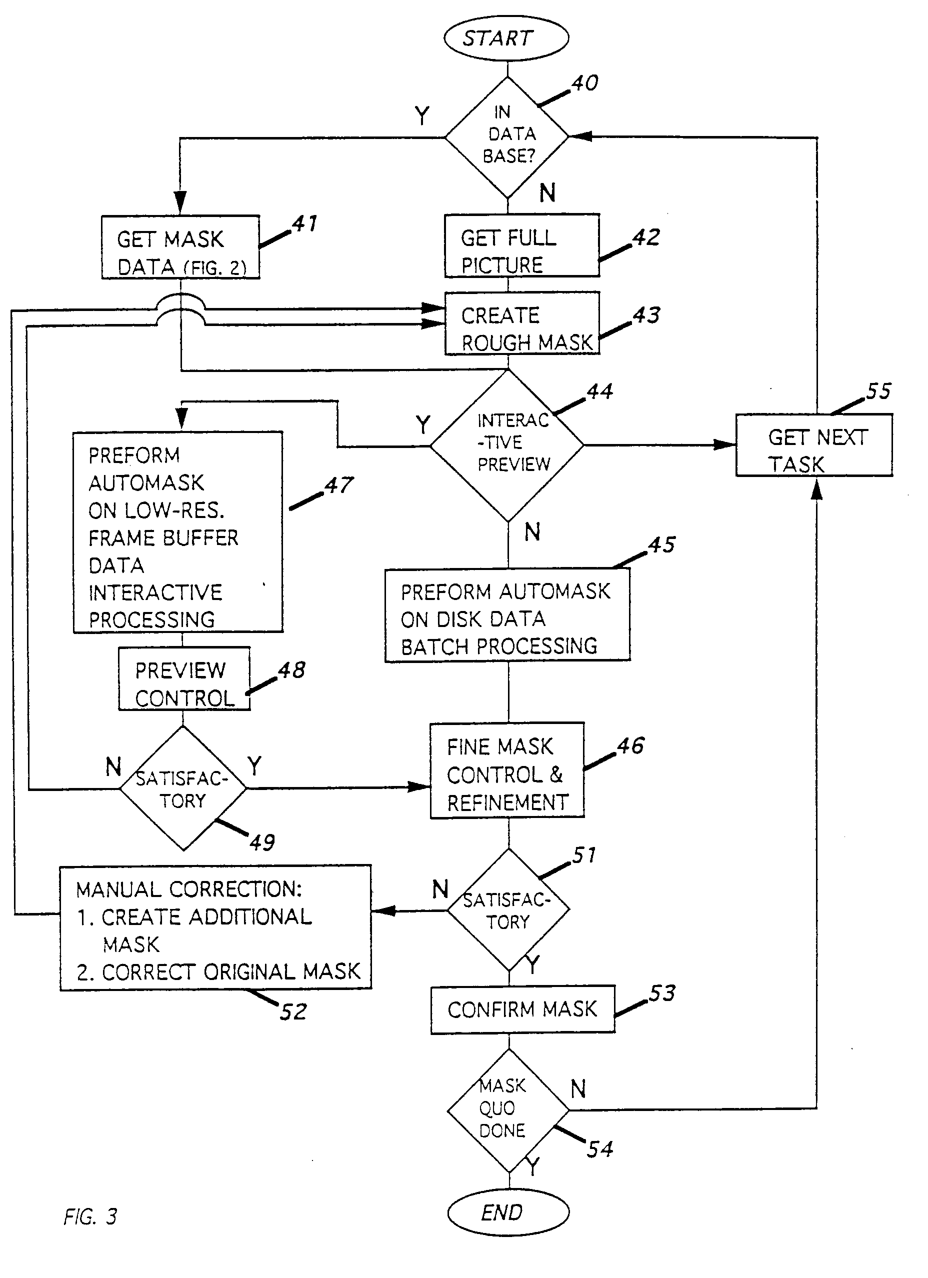

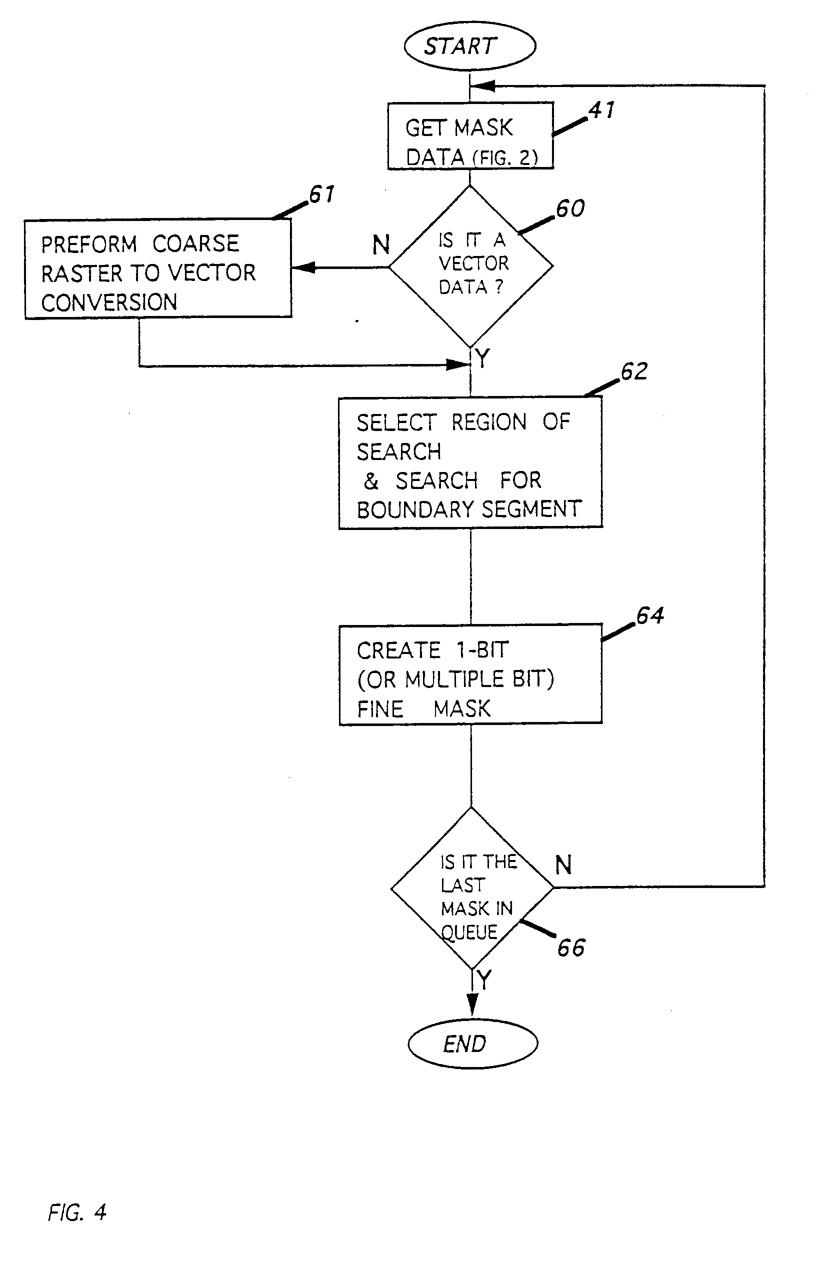

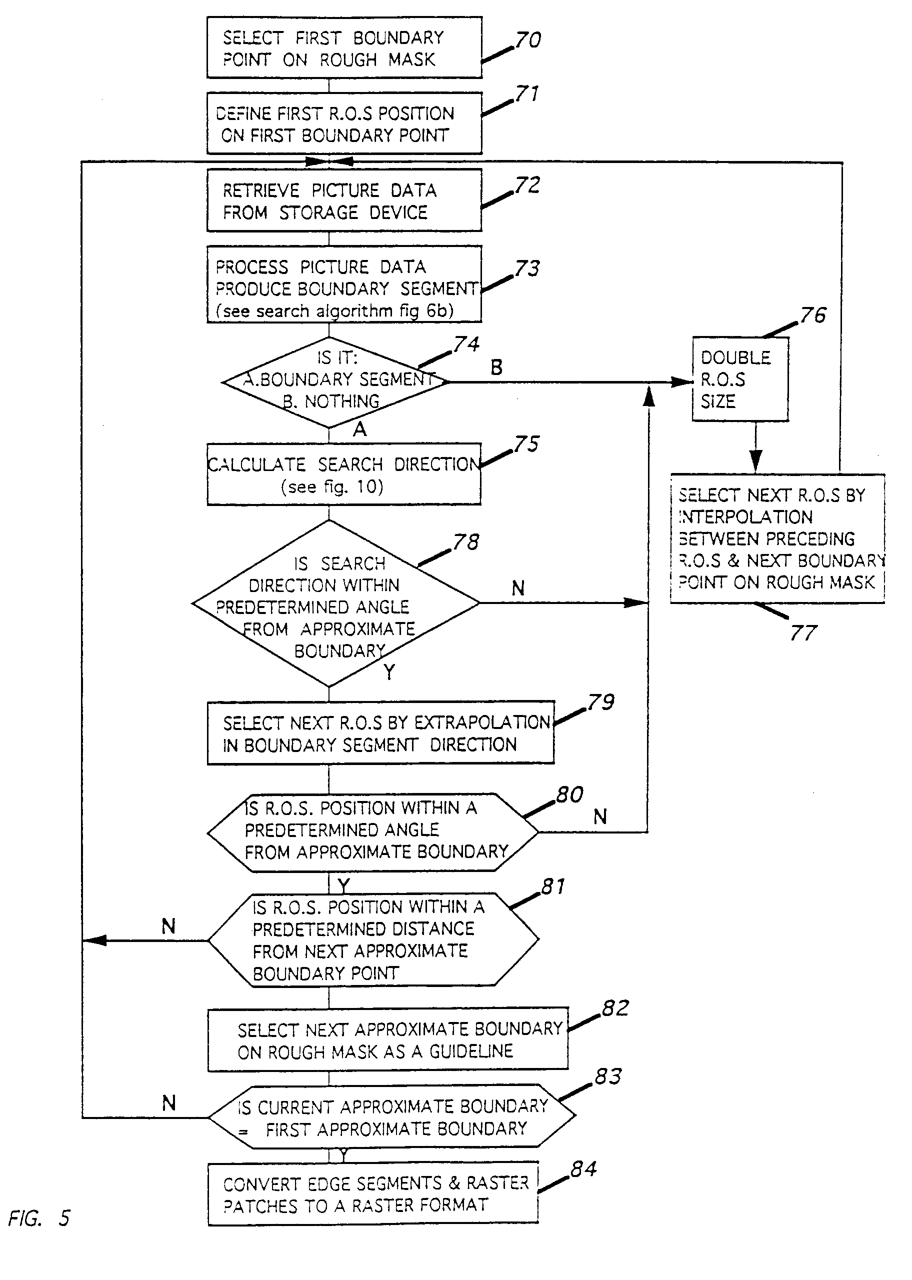

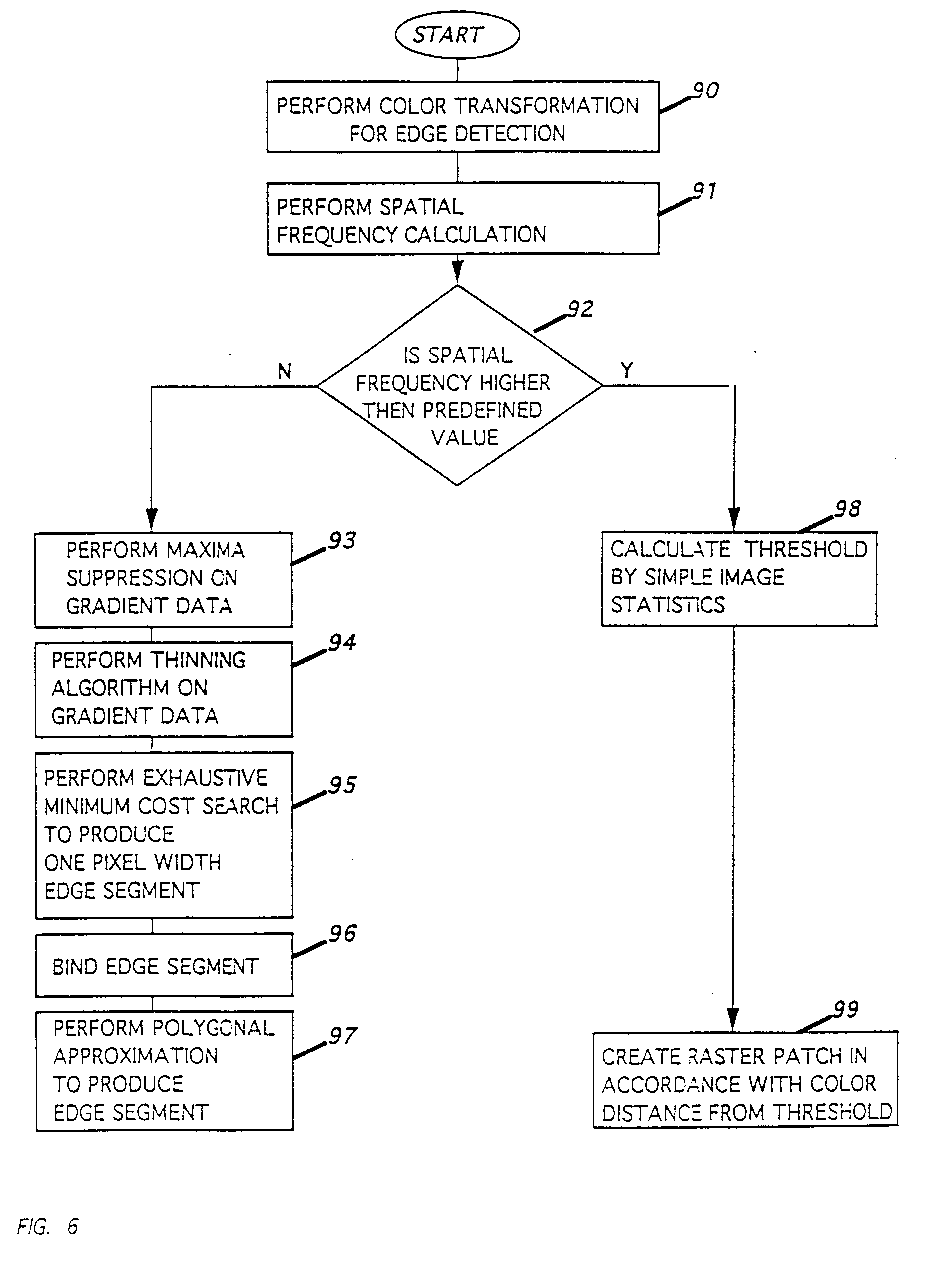

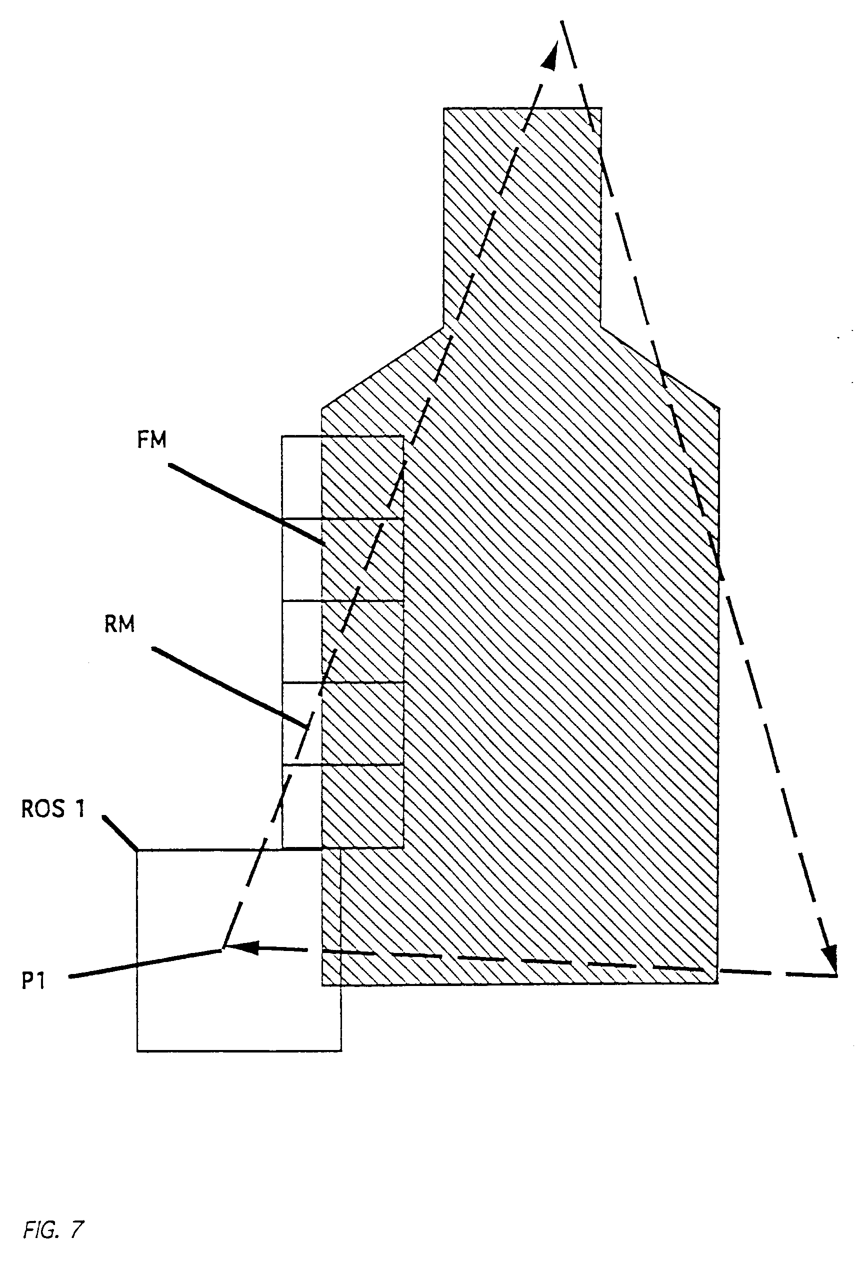

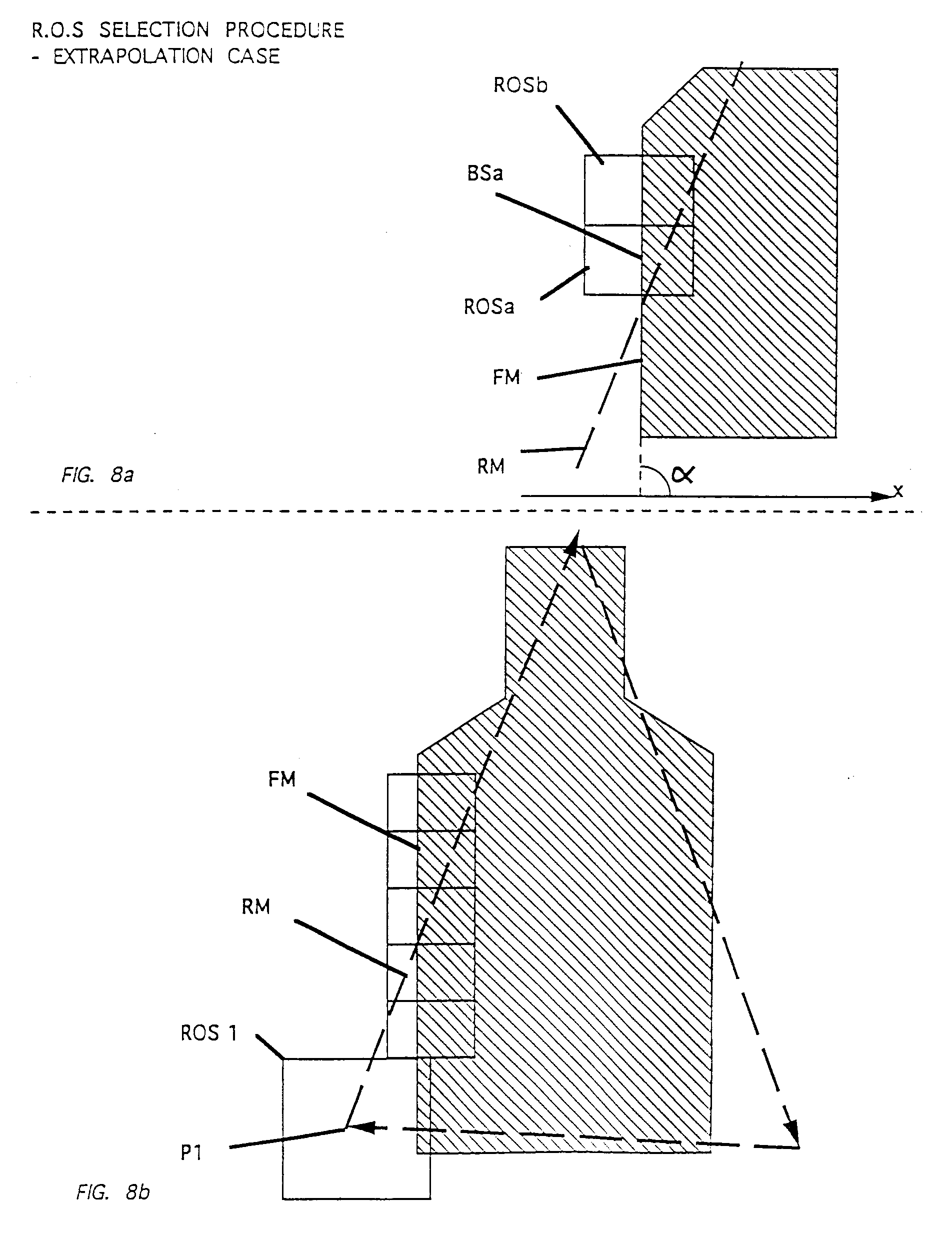

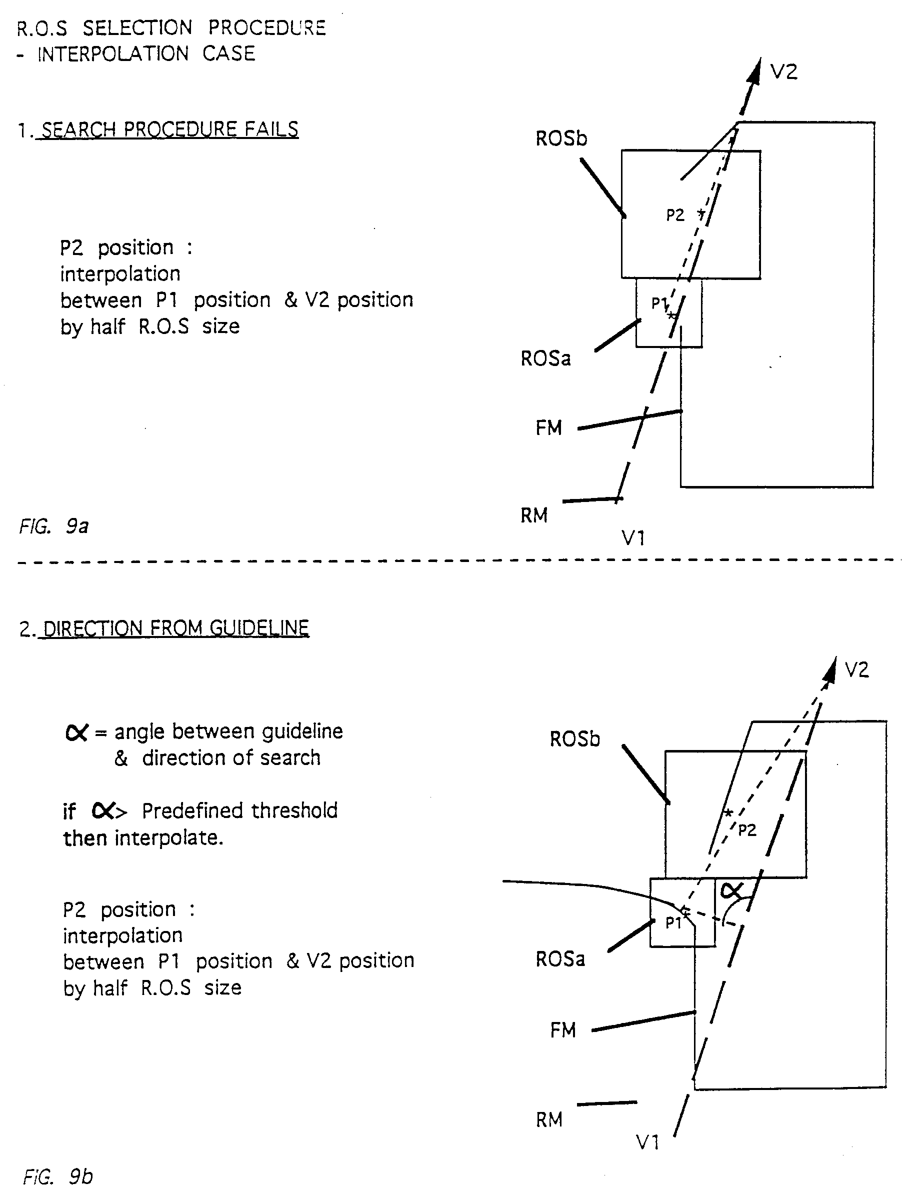

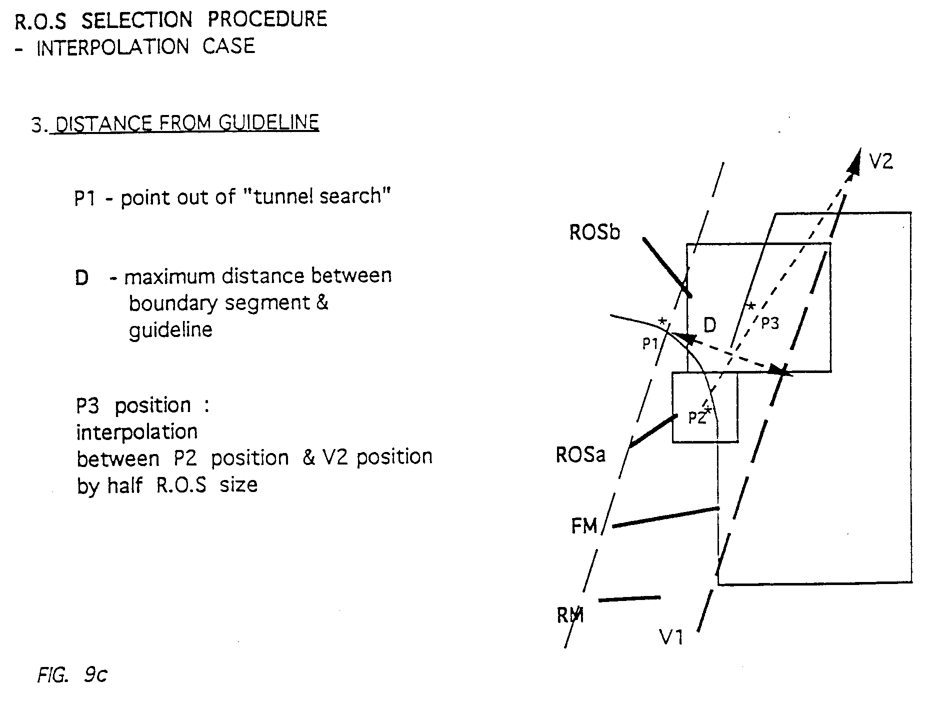

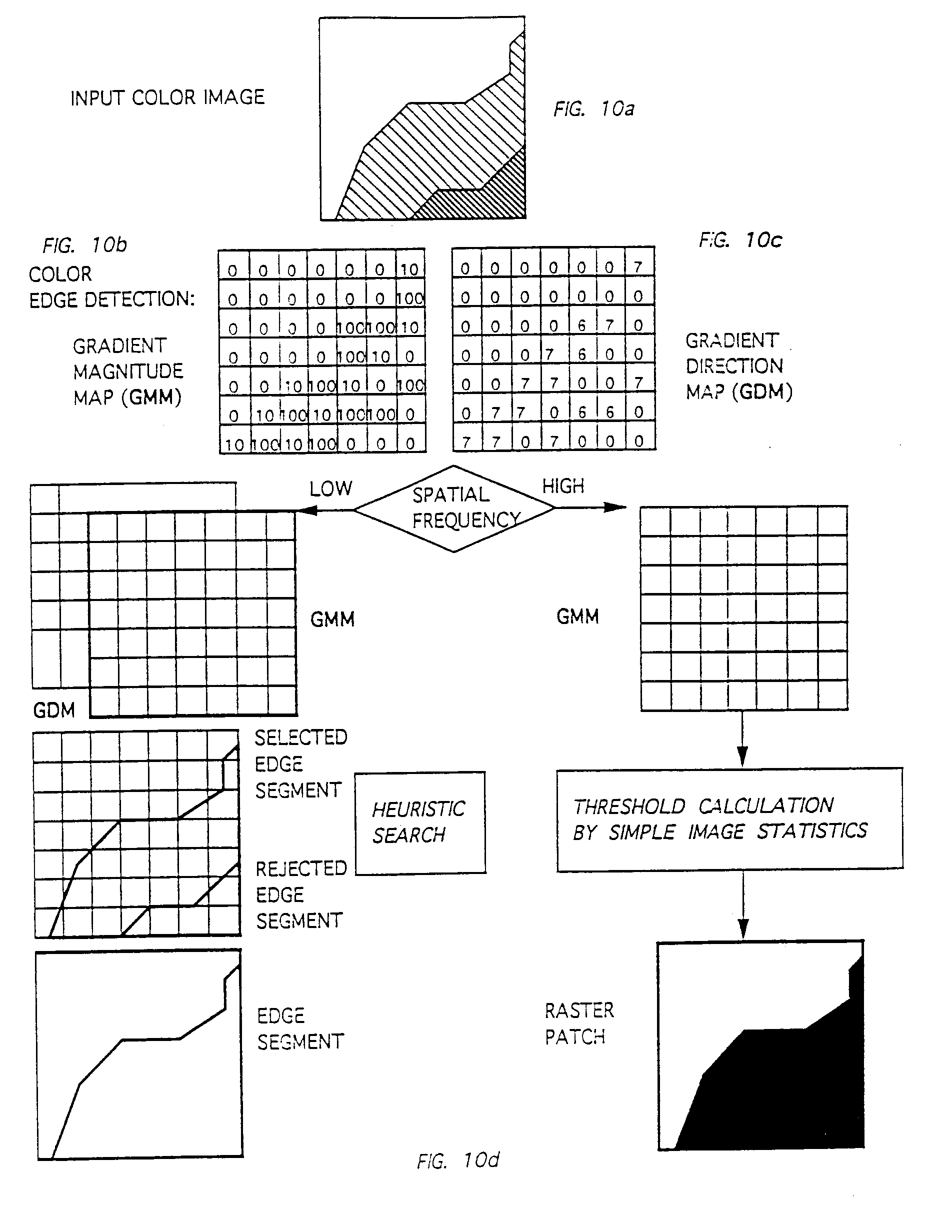

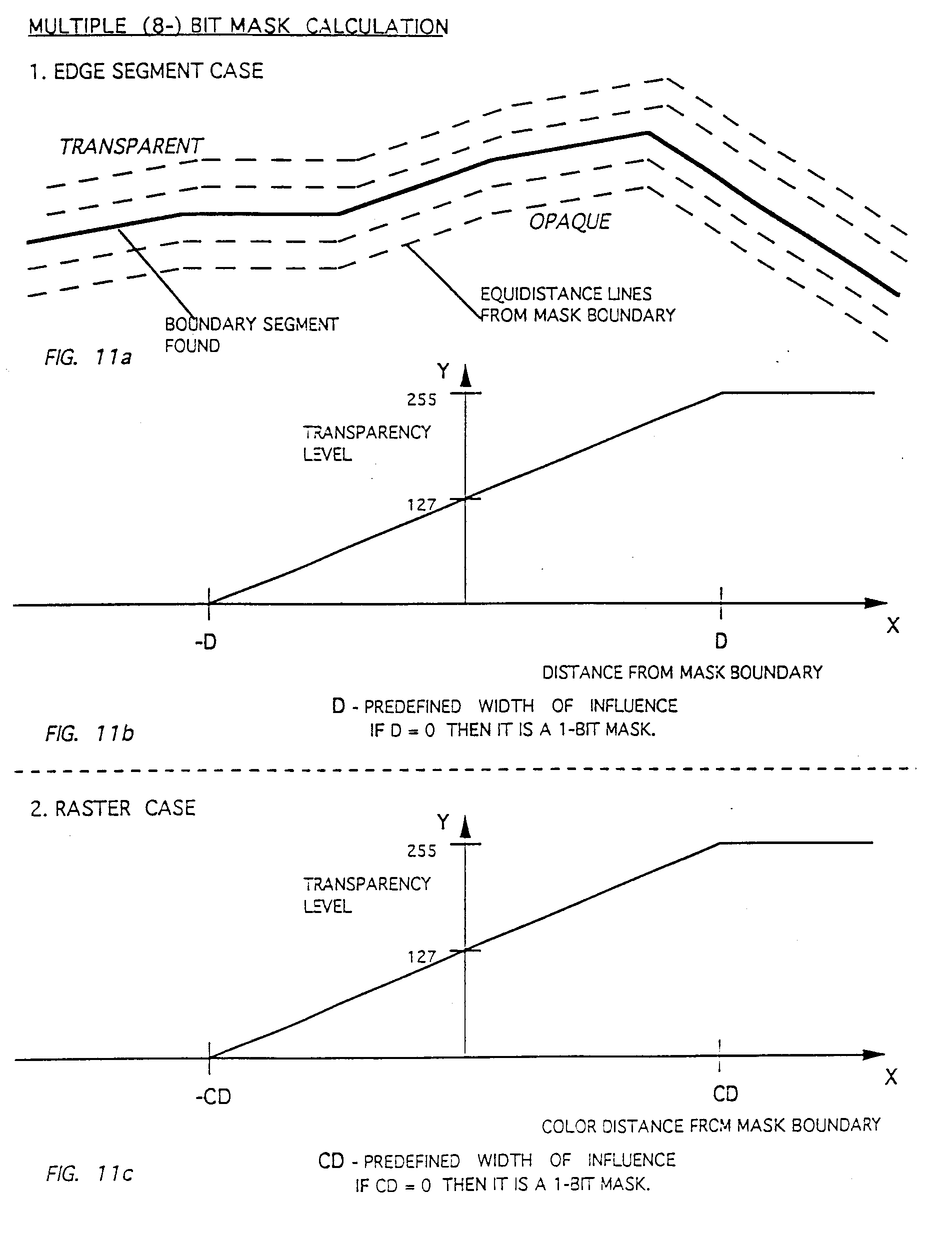

## Claims

1. A method for storing an image in an image processing database format comprising the steps of:
automatically defining a multiplicity of regions in the image;
uniting individual ones of the regions in accordance with user input, thereby to define a plurality of image processing operands; and
generating an image processing operand database by storing the locations of the image processing operands.

2. A method for storing an image in an image processing database format comprising the steps of:
defining a plurality of image processing operands in the image;
determining at least one image processing feature of at least one of the image processing operands; and
generating an image processing operand database including the locations and features of the image processing operands.

3. A method for employing an image processing database format to process an image, the method comprising the steps of:
generating an image processing operand database by defining a plurality of image processing operands in the image and storing the locations of the image processing operands; and
performing an image processing operation at least twice on an at least two respective operand sets, each of the operand sets including at least one of the operands in the operand database.

4. A method for processing an image by employing an image processing operation in which a modified feature value is assigned to all image locations whose original feature value falls within a range of the image processing operation, the method comprising the steps of:
defining the location of an image processing operand including a multiplicity of image locations;
for at least one feature characterizing individual image locations, determining the range of the feature within the operand; and
performing the image processing operation on the image processing operand by defining the range of the operation as the range of the feature within the operand.

5. A method for representing image processing operations in memory comprising the step of:
storing, for at least one operand in an operand set of at least one image processing operation, an indication of operand features pertinent to the image processing operation.

6. Color image processing apparatus comprising:
color image memory in which a representation of a color image is stored;
an operations database memory in which a plurality of characteristics of at least one color image processing operation is stored;
an operand database memory in which a plurality of features of at least one color image operand is stored; and
a control unit which is operative to retrieve at least one operation from the operations database and at least one operand from the operand database memory and to perform the operation on the operand by modifying the representation of the color image.

7. Apparatus for storing an image in an image processing database format, the apparatus comprising:
an automatic image region defining unit operative to automatically define a multiplicity of regions in the image;
a user-interfacing operand generator operative to unite individual ones of the regions in accordance with user input, thereby to define a plurality of image processing operands; and
an image processing operand database generator operative to store locations of the image processing operands within the image.

8. Apparatus for storing an image in an image processing database format, the apparatus comprising:
an operand defining user interface allowing a user to define a plurality of image processing operands in the image;
an operand analyser operative to determine at least one image processing feature of at least one of the image processing operands; and
a operand database generator operative to generate an image processing operand database including the locations and features of the image processing operands.

9. Apparatus for employing an image processing database format to process an image, the apparatus comprising:
an operand database generator operative to generate an image processing operand database by defining a plurality of image processing operands in the image and storing the locations of the image processing operands; and
an operand-based image processor in communication with the operand database and operative to perform an image processing operation at least twice on an at least two respective operand sets, each of the operand sets including at least one of the operands in the operand database.

10. Apparatus for processing an image by employing an image processing operation in which a modified feature value is assigned to all image locations whose original feature value falls within a range of the image processing operation, the apparatus comprising:
an operation location designator operative to define the location of an image processing operand including a multiplicity of image locations;
a feature range identifier, operative, for at least one feature characterizing individual image locations, to determine the range of the feature within the operand; and
an image processor communicating with the feature range identifier for performing the image processing operation on the image processing operand by defining the range of the operation as the range of the feature within the operand.

11. Apparatus for representing image processing operations in memory, the apparatus comprising:
an operand feature memory in which is stored, for at least one operand in an operand set of at least one image processing operation, an indication of operand features pertinent to the image processing operation.
